(19) Europäisches Patentamt
European Patent Office
Office européen des brevets

(11) **EP 4 380 091 A1**

(12) **EUROPEAN PATENT APPLICATION**
published in accordance with Art. 153(4) EPC

(43) Date of publication:
**05.06.2024 Bulletin 2024/23**

(21) Application number: **22848594.2**

(22) Date of filing: **27.07.2022**

(51) International Patent Classification (IPC):
***H04L 5/00*** *(2006.01)*

(52) Cooperative Patent Classification (CPC):
**H04L 5/00; H04W 72/0446**

(86) International application number:
**PCT/CN2022/108340**

(87) International publication number:
**WO 2023/005989 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2021 CN 202110865185**

(71) Applicant: **Huawei Technologies Co., Ltd.
Shenzhen, Guangdong 518129 (CN)**

(72) Inventors:
• **ZHANG, Yongping
Shenzhen, Guangdong 518129 (CN)**
• **ZHANG, Min
Shenzhen, Guangdong 518129 (CN)**
• **YU, Zheng
Shenzhen, Guangdong 518129 (CN)**
• **LI, Tie
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **REFERENCE SIGNAL RESOURCE DETERMINATION METHOD AND APPARATUS**

(57) This application relates to the field of communication technologies, and provides a reference signal resource determining method and an apparatus, to resolve the following problem: In a multi-point transmission mode, uplink sending occurs between reference signals from different transmission points in a CSI measurement process; consequently, phases are discontinuous on the reference signals received by a terminal device from the different transmission points. First, configuration information of a reference signal resource set is obtained to determine K reference signal resources, where K is a positive integer, and slots in which at least two of the K reference signal resources are located are different slots, or there is an uplink symbol in a first interval of at least two of the K reference signal resources. Then, N reference signal resources included in a channel measurement resource pair are determined, where the N reference signal resources are N reference signal resources in the K reference signal resources, and N is a positive integer less than or equal to K and greater than 1.

Step 201

Obtain configuration information of a reference signal resource set, where the configuration information of the reference signal resource set includes configuration information of K reference signal resources, and the configuration information of the K reference signal resources is for determining the K reference signal resources

Step 202

Determine N reference signal resources included in a channel measurement resource pair, where the N reference signal resources are N reference signal resources in the K reference signal resources

FIG. 2

EP 4 380 091 A1

**Description**

**CROSS-REFERENCE TO RELATED APPLICATIONS**

This application claims priority to Chinese Patent Application No. 202110865185.2, filed with the China National Intellectual Property Administration on July 29, 2021 and entitled "REFERENCE SIGNAL RESOURCE DETERMINING METHOD AND APPARATUS", which is incorporated herein by reference in its entirety.

**TECHNICAL FIELD**

Embodiments of this application relate to the communication field and the like, and in particular, to a reference signal resource determining method and an apparatus.

**BACKGROUND**

NR is based on multiple-input multiple-output (multi-input multi-output, MIMO). To improve downlink performance, a multi-transmission point technology is introduced in Release (Release)-16. The multi-transmission point technology uses a non-coherent joint transmission (non-coherent joint transmission, NCJT) mode. Specifically, a plurality of transmission points may simultaneously provide data transmission services for one terminal device.

In NCJT measurement, a terminal device receives reference signals on two reference signal resources included in a same channel measurement resource pair, and performs joint channel estimation based on an NCJT measurement assumption on the reference signals received on the two reference signal resources. However, when uplink sending occurs between two reference signal resources, there is a phase difference in reference signals received by the terminal device on the two reference signal resources. Consequently, an estimation result of channel state information (channel state information, CSI) is inaccurate.

Based on this, how to avoid or reduce the following case is a technical problem that needs to be resolved: In a multi-transmission point scenario, uplink sending occurs between reference signals from different transmission points in a CSI measurement process; consequently, phases are discontinuous on the reference signals received by a terminal device from the different

**SUMMARY**

Embodiments of this application provide a reference signal resource determining method and an apparatus, to resolve the following problem: In a multi-point transmission mode, uplink sending occurs between reference signals from different transmission points in a CSI measurement process; consequently, phases are discontinuous on the reference signals received by a terminal device from the different transmission points.

According to a first aspect, this application provides a reference signal resource determining method applied to a terminal device or a chip in a terminal device. First, obtaining configuration information of a reference signal resource set, where the configuration information of the reference signal resource set includes configuration information of K reference signal resources, the configuration information of the K reference signal resources is for determining the K reference signal resources, and K is a positive integer. Slots in which at least two of the K reference signal resources are located are different slots, or there is an uplink symbol in a first interval of at least two of the K reference signal resources; and then, determining N reference signal resources included in a channel measurement resource pair, where the N reference signal resources are N reference signal resources in the K reference signal resources, and N is a positive integer less than or equal to K and greater than 1.

When the at least two reference signal resources are in different slots, a problem of a phase difference caused by uplink-downlink switching may be further avoided in another manner. A case in which the at least two of the K reference signal resources are located in different slots has more flexible reference signal resource configuration compared with a case in which the at least two of the K reference signal resources are located in a same slot. In this way, performance deterioration of the entire network caused by excessive limitation on reference signal resources for resolving the foregoing problem can be avoided.

In a possible implementation, the determining N reference signal resources included in a channel measurement resource pair includes: receiving first signaling, where the first signaling indicates the N reference signal resources; and/or determining the N reference signal resources from the K reference signal resources according to a preset rule.

In a possible implementation, the method may further include: receiving a reference signal on the N reference signal resources; and/or reporting a CSI report associated with the N reference signal resources.

In a possible implementation, there is neither an uplink symbol nor a flexible symbol/either no uplink symbol or no flexible symbol in a second interval of the N reference signal resources; there is an uplink symbol in a second interval of the N reference signal resources, and uplink transmission is not performed on the uplink symbol; the N reference signal resources are in a same slot, and a reference signal resource type associated with the reference signal resource set is periodic or semi-persistent; the N reference signal resources are in Q slots, where Q is a positive integer less than or equal to N, the Q slots are consecutive slots, and the Q slots include only a downlink symbol and/or a flexible symbol; the N reference signal resources are in T slots, where T is a positive integer less than or equal to N, the T slots are inconsecutive slots, the T slots include only a downlink symbol and/or a flexible symbol, and a slot between the T slots includes only a downlink symbol and/or a flexible symbol; or there is only a downlink symbol and/or a flexible symbol in a third interval of the N reference signal resources.

This implementation avoids phase inconsistency through configuration.

In a possible implementation, a reference signal is not received on at least one of the N reference signal resources; a CSI report associated with the N reference signal resources is not reported; and/or a CSI report that is not updated is reported.

That the reference signal is not received may be that the reference signal is not received, or that the reference signal is received but not used, and is not processed as a valid signal or information.

The CSI report that is not updated may be a CSI report that is reported last time and stored in a UE buffer, or may be an out-of-range CSI report, where a channel quality indicator CQI included in the out-of-range CSI report is 0. Because the CQI being 0 is an out-of-range value, when receiving the CSI report, a network device knows that the CSI report is an out-of-range CSI report. A main purpose of reporting the CSI report that is not updated is that: When a CSI report is transmitted together with other uplink data, if the CSI report is not reported, an uplink data capacity is reduced, and the UE needs to perform rate matching again, so that the uplink data can be accurately mapped to an uplink resource allocated by the network device. This process causes higher implementation complexity and higher power consumption for the UE.

This implementation avoids uplink-downlink switching between the N reference signal resources included in the channel measurement resource pair through configuration at the network device side, to avoid phase inconsistency.

In a possible implementation, the N reference signal resources are associated with a same transmit opportunity, and there is a flexible symbol and/or an uplink symbol in symbols corresponding to the transmit opportunity; the N reference signal resources are in different slots, and a reference signal resource type associated with the reference signal resource set is periodic or semi-persistent; there is an uplink symbol and/or a flexible symbol in a second interval of the N reference signal resources; or there is an uplink symbol and/or a flexible symbol in a third interval of the N reference signal resources.

In a possible implementation, the first interval is a time range from an end symbol of a first reference signal resource to a start symbol of a second reference signal resource, the first reference signal resource and the second reference signal resource are associated with a same transmit opportunity, the first reference resource is the earliest reference signal resource in the at least two reference signal resources, and the second reference resource is the last reference signal resource in the at least two reference signal resources.

In a possible implementation, the second interval is a time range from an end symbol of a third reference signal resource to a start symbol of a fourth reference signal resource, the third reference signal resource and the fourth reference signal resource are associated with a same transmit opportunity, the third reference resource is the earliest reference signal resource in the N reference signal resources, and the fourth reference resource is the last reference signal resource in the N reference signal resources.

In a possible implementation, the third interval is a time range between a first reference signal transmit opportunity of a fifth reference signal resource and a second reference signal transmit opportunity of a sixth reference signal resource, neither of the first reference signal transmit opportunity and the second reference signal transmit opportunity is later than a CSI reference resource, the first reference signal transmit opportunity is one or more reference signal transmit opportunities closest to the CSI reference resource in reference signal transmit opportunities of the fifth reference signal resource, the second reference signal transmit opportunity is one or more reference signal transmit opportunities closest to the CSI reference resource in reference signal transmit opportunities of the sixth reference signal resource, the fifth reference resource is a reference signal resource in the N reference signal resources, and the sixth reference resource is a reference signal resource in the N reference signal resources.

In a possible implementation, a slot in which the first reference signal transmit opportunity is located and a slot in which the second reference signal transmit opportunity is located are consecutive slots.

In a possible implementation, the method may further include: sending first capability information, where the first capability information indicates that a terminal device supports a case in which the N reference signal resources are in different slots; the first capability information indicates that a terminal device does not support a case in which the N reference signal resources are in different slots; or the first capability information indicates that a terminal device supports only a case in which the N reference signal resources are in different slots.

In a possible implementation, the method may further include: sending second capability information, where the second capability information indicates that a terminal device supports a case in which there is an uplink symbol in the second interval of the N reference signal resources; the second capability information indicates that a terminal device does not support a case in which there is an uplink symbol in the second interval of the N reference signal resources; or the second capability information indicates that a terminal device supports only a case in which there is no uplink symbol in the second interval of the N reference signal resources.

In a possible implementation, the method may further include: sending third capability information, where the third capability information indicates that a terminal device supports a case in which there is an uplink symbol in the third interval of the N reference signal resources; the third capability information indicates that a terminal device does not support a case in which there is an uplink symbol in the third interval of the N reference signal resources; or the third capability information indicates that a terminal device supports only a case in which there is no uplink symbol in the third interval of the N reference signal resources.

According to a second aspect, a communication apparatus is provided. The apparatus has a function of implementing any one of the first aspect or the possible implementations of the first aspect. The function may be implemented by hardware, or may be implemented by hardware by executing corresponding software. The hardware or software includes one or more functional modules corresponding to the foregoing function.

According to a third aspect, a communication apparatus is provided. The communication apparatus includes a processor, and optionally, further includes a memory. The processor is coupled to the memory, the memory is configured to store a computer program or instructions, and the processor is configured to execute some or all computer programs or instructions in the memory. When the some or all computer programs or instructions are executed, the function of the terminal device in the method according to any one of the first aspect or the possible implementations of the first aspect is implemented.

In a possible implementation, the apparatus may further include a transceiver, and the transceiver is configured to: transmit a signal processed by the processor, or receive a signal input into the processor. The transceiver may perform the sending action or receiving action performed by the terminal device in any one of the first aspect or the possible implementations of the first aspect.

According to a fourth aspect, this application provides a chip system. The chip system includes one or more processors (also referred to as processing circuits). The processor is electrically coupled to a memory (also referred to as a storage medium), the memory may be located in the chip system, or may not be located in the chip system, the memory is configured to store a computer program or instructions, and the processor is configured to execute some or all computer programs or instructions in the memory. When the some or all computer programs or instructions are executed, the function of the terminal device in the method according to any one of the first aspect or the possible implementations of the first aspect is implemented.

In a possible implementation, the chip system may further include an input/output interface (also referred to as a communication interface), and the input/output interface is configured to: output a signal processed by the processor, or receive a signal input into the processor. The input/output interface may perform the sending action or receiving action performed by the terminal device in any one of the first aspect or the possible implementations of the first aspect. Specifically, the output interface performs the sending action, and the input interface performs the receiving action.

In a possible implementation, the chip system may include a chip, or may include a chip and another discrete component.

According to a fifth aspect, a computer-readable storage medium is provided, configured to store a computer program, and the computer program includes instructions for implementing the function according to any one of the first aspect or the possible implementations of the first aspect.

Alternatively, a computer-readable storage medium is provided, configured to store a computer program, and when the computer program is executed by a computer, the computer is enabled to perform the method performed by the terminal device in any one of the first aspect or the possible implementations of the first aspect.

According to a sixth aspect, a computer program product is provided, and the computer program product includes computer program code. When the computer program code is run on a computer, the computer is enabled to perform the method performed by the terminal device in any one of the first aspect or the possible implementations of the first aspect.

For technical effects of the second aspect to the sixth aspect, refer to the descriptions in the first aspect. Details are not described herein.

## BRIEF DESCRIPTION OF DRAWINGS

FIG. 1a is a schematic diagram of a communication system according to an embodiment of this application;
FIG. 1b is a schematic diagram of multi-TRP transmission according to an embodiment of this application;
FIG. 1c is a schematic diagram of multi-TRP transmission according to an embodiment of this application;

FIG. 2 is a flowchart of a reference signal resource determining method according to an embodiment of this application;

FIG. 3 is a schematic diagram of a transmit opportunity of a periodic/semi-persistent reference signal resource according to an embodiment of this application;

FIG. 4 is a schematic diagram of an interval of a plurality of reference signal resources in a same reference signal resource set according to an embodiment of this application;

FIG. 5 is a schematic diagram of reference signal resource distribution according to an embodiment of this application;

FIG. 6 is a schematic diagram of reference signal resource distribution according to an embodiment of this application;

FIG. 7 is a schematic diagram of reference signal resource distribution according to an embodiment of this application;

FIG. 8 is a schematic diagram of reference signal resource distribution according to an embodiment of this application;

FIG. 9 is a schematic diagram of reference signal resource distribution according to an embodiment of this application;

FIG. 10 is a schematic diagram of reference signal resource distribution according to an embodiment of this application;

FIG. 11 is a schematic diagram of a structure of a communication apparatus according to an embodiment of this application; and

FIG. 12 is a schematic diagram of a structure of a communication apparatus according to an embodiment of this application.

## DESCRIPTION OF EMBODIMENTS

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions in embodiments of this application may be used in various communication systems, for example, a satellite communication system and a conventional mobile communication system. The satellite communication system may be integrated with the conventional mobile communication system (namely, a terrestrial communication system). For example, the communication system is a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, a 6th generation (6th generation, 6G) system, another future communication system, or the like. The communication system further supports a communication system that integrates a plurality of wireless technologies, for example, may be further used in a system that integrates a non-terrestrial network (non-terrestrial network, NTN), such as an unmanned aerial vehicle, a satellite communication system, or a high altitude platform station (high altitude platform station, HAPS), and a terrestrial mobile communication network.

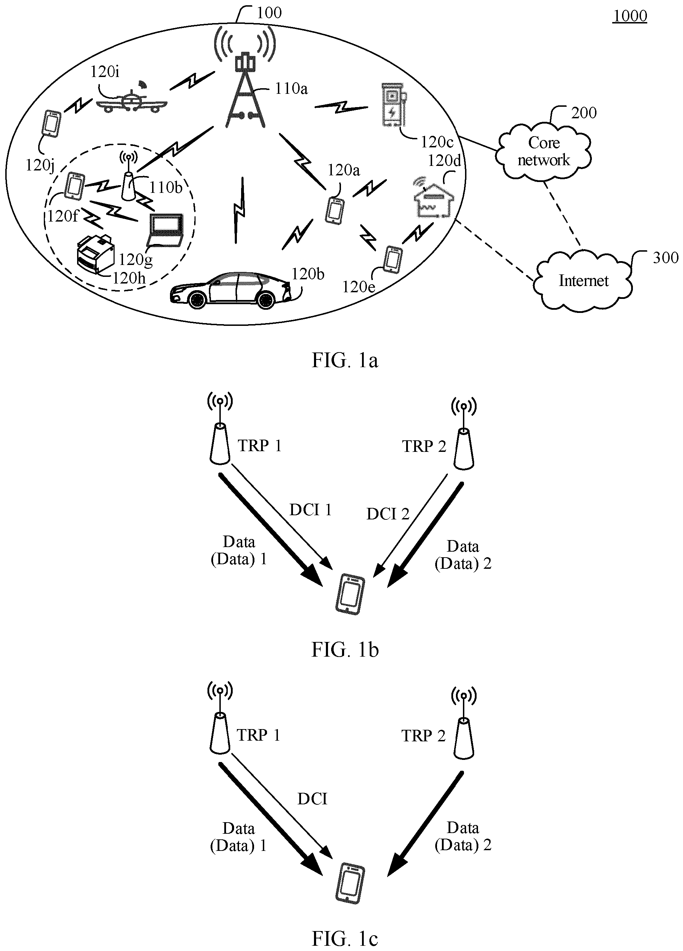

FIG. 1a is a schematic diagram of an architecture of a communication system 1000 used in an embodiment of this application. As shown in FIG. 1a, the communication system includes a radio access network 100 and a core network 200. Optionally, the communication system 1000 may further include the Internet 300. The radio access network 100 may include at least one radio access network device (for example, 110a and 110b in FIG. 1a), and may further include at least one terminal (for example, 120a to 120j in FIG. 1a). The terminal is connected to the radio access network device in a wireless manner, and the radio access network device is connected to the core network in a wireless or wired manner. The core network device and the radio access network device may be different physical devices independent of each other, or functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1a is merely a schematic diagram. The communication system may further include another network device, for example, may further include a wireless relay device and a wireless backhaul device, which are not shown in FIG. 1a.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The radio access network device may be a macro base station (for example, 110a in FIG. 1a), may be a micro base station or an indoor station (for example, 110b in FIG. 1a), or may be a relay node, a donor node, or the like. It may be understood that all or some functions of the radio access network device in this application may alternatively be implemented by using a software function running on hardware, or may be implemented by using a virtualization function instantiated on a platform (for example, a cloud platform). A specific technology and a specific device form that are used by the radio access network device are not limited in this embodiment of this application. For ease of description, the following uses an example in which a base station is used as the radio access network device for description.

The terminal may also be referred to as a terminal device, user equipment (user equipment, UE), a mobile station, a mobile terminal, or the like. The terminal may be widely applied to various scenarios such as device-to-device (device-to-device, D2D), vehicle-to-everything (vehicle to everything, V2X) communication, machine type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in this embodiment of this application.

The base station and the terminal may be located at fixed positions, or may be mobile. The base station and the terminal may be deployed on land, and include an indoor or outdoor device, a handheld device, or a vehicle-mounted device; or may be deployed on water; or may be deployed on a plane, a balloon, and a satellite in air. Application scenarios of the base station and the terminal are not limited in this embodiment of this application.

Roles of the base station and the terminal may be relative. For example, the helicopter or unmanned aerial vehicle 120i in FIG. 1a may be configured as a mobile base station. For the terminal 120j that accesses the radio access network 100 by using 120i, the terminal 120i is a base station. However, for the base station 110a, the terminal 120i is a terminal, to be specific, 110a and 120i communicate with each other by using a wireless air interface protocol. It is clear that, 110a and 120i may alternatively communicate with each other by using an interface protocol between base stations. In this case, for 110a, 120i is also a base station. Therefore, the base station and the terminal may be collectively referred to as communication apparatuses. 110a and 110b in FIG. 1a may be referred to as communication apparatuses having a base station function, and 120a to 120j in FIG. 1a may be referred to as communication apparatuses having a terminal function.

Communication between the base station and the terminal, between base stations, and between terminals may be performed by using a licensed spectrum, an unlicensed spectrum; or both the licensed spectrum and the unlicensed spectrum; and may be performed by using a spectrum below 6 gigahertz (gigahertz, GHz), a spectrum above 6 GHz, or both the spectrum below 6 GHz and the spectrum above 6 GHz. Spectrum resources used for wireless communication are not limited in this embodiment of this application.

In this embodiment of this application, a function of the base station may alternatively be performed by a module (such as a chip) in the base station, or may be performed by a control subsystem including a base station function. For example, the control subsystem including the base station function may be a control center in the foregoing terminal application scenarios such as smart grid, industrial control, smart transportation, and smart city. A function of the terminal may alternatively be performed by a module (such as a chip or a modem) in the terminal, or may be performed by an apparatus including a terminal function.

In this application, the base station sends a downlink signal or downlink information to the terminal, where the downlink information is carried on a downlink channel; and the terminal sends an uplink signal or uplink information to the base station, where the uplink information is carried on an uplink channel.

The following describes related technologies in this application.

(1) Multi-TRP transmission technology

NR is based on multiple-input multiple-output (multi-input multi-output, MIMO). To improve downlink performance, a multi-TRP transmission technology is introduced in Release (Release)-16. The multi-TRP transmission technology uses a non-coherent joint transmission (non-coherent joint transmission, NCJT) mode. Specifically, a maximum of two TRPs may simultaneously provide data transmission services for one UE. In terms of implementation, currently, Release-16 provides two manners: Manner 1 is a manner based on multi-downlink control information (downlink control information, DCI). Refer to FIG. 1b. Manner 2 is a manner based on single-DCI. Refer to FIG. 1c.

In the manner 1, either of the two TRPs transmits one piece of downlink control information DCI, and the two TRPs schedule two physical downlink shared channels (Physical downlink share channels, PDSCHs) to send two pieces of DCI to one UE, where one piece of DCI is for scheduling one PDSCH.

In the manner 2, only one of the two TRPs transmits one piece of DCI, and schedules one PDSCH. However, some streams/layers (corresponding to some demodulation reference signal (demodulation reference signal, DMRS) ports) in the PDSCH are transmitted by one TRP, and other streams/layers (corresponding to other DMRS ports) are transmitted by the other TRP.

(2) Channel state information (channel state information, CSI) measurement and reporting

In a communication process of a wireless system, a network side needs to obtain channel state information CSI of downlink channels between a TRP and different UEs in advance. The obtaining process may be as follows: The TRP transmits a channel state sounding signal (where for example, a non-zero power channel state information reference signal (non-zero power channel state information reference signal, NZP CSI-RS) is used in NR), and the UE receives the NZP CSI-RS signal on a preconfigured channel measurement resource (channel measurement resource, CMR) to perform channel estimation. In addition, the network side further configures a group of interference measurement resources (interference measurement resources, IMRs) corresponding to the CMR for the UE, and the UE receives the signal on the preconfigured IMRs to perform interference measurement. The CSI is obtained through calculation based on measurement results on the CMR and the IMR. The CSI are fed back to the network side through an uplink channel. The network side performs scheduling based on the CSI reported by each UE, and then sends service data to the UE on a downlink data channel (PDSCH).

It should be noted that, in the NR protocol, the network side configures the CMR and the IMR for the UE, and the UE performs corresponding channel estimation and interference estimation based on the signals on the CMR and the IMR. For brevity of description, the foregoing process is simplified as follows: The UE performs CSI measurement on the CMR and the IMR.

In earlier releases (Release-15 and Release-16) of NR, CSI measurement is based on a single-TRP measurement assumption. To be specific, when the UE performs CSI measurement, it is assumed that subsequent data is sent from one TRP, and a corresponding CSI result is obtained through measurement on one CMR and an IMR associated with the CMR. However, after the multi-TRP transmission mode is introduced in Release-16, CSI measurement in Release-15 and Release-16 cannot support a measurement requirement of the multi-TRP transmission mode (namely, the foregoing NCJT sending mode). Therefore, in the latest Release-17, existing CSI measurement is enhanced to support CSI measurement based on an NCJT measurement assumption.

(3) CSI measurement resource configuration

To support CSI measurement based on the non-coherent joint transmission NCJT measurement assumption, NR Release-17 specifies that a network device may configure, for a UE, K non-zero power channel state information reference signal NZP CSI-RS resources used for channel measurement, and these resources constitute an NZP CSI-RS resource set.

The network side may further configure or indicate R (where $R \geq 1$) channel measurement resource pairs (channel measurement resource pairs, CMR pairs) in the K NZP CSI-RS resources, where each channel measurement resource pair CMR pair includes two NZP CSI-RS resources, and each NZP CSI-RS resource is associated with a different TRP.

From a perspective of configuration, two NZP CSI-RS resources corresponding to a same channel measurement resource pair are associated with two different pieces of transmission configuration indicator state (transmission configuration indicator state, TCI state) information, and the two pieces of TCI state include quasi co-location (quasi co-location, QCL) information of the NZP CSI-RS resources. The UE can receive reference signals on the corresponding NZP CSI-RS resources only based on the QCL information included in the TCI state. The UE performs CSI calculation on two NZP CSI-RS resources included in each channel measurement resource pair based on the NCJT measurement assumption. Therefore, when R channel measurement resource pairs are configured, it means that there are R NCJT measurement assumptions.

The UE only needs to know the QCL information, and does not need to know a specific TRP from which the current NZP CSI-RS resource comes. In other words, from an implementation perspective, the network device only needs to configure, for two NZP CSI-RS resources corresponding to a same CMR pair, TCI states that include different QCL information, and associate QCL information in each TCI state with a different TRP.

In addition, the network device may configure the UE to separately perform CSI calculation on the K NZP CSI-RS resources based on the single-TRP measurement assumption, that is, there are K single-TRP measurement assumptions.

To control complexity of CSI measurement based on the NZP CSI-RS resource set, Release 17 further discusses that the network side may further configure or indicate M ($M \leq K$) NZP CSI-RS resources in the K NZP CSI-RS resources, or in other words, configure or indicate M CMRs and interference measurement resources (interference measurement resources, IMRs) associated with the M CMRs. The UE performs CSI calculation on the M CMRs and the IMRs associated with the M CMRs based on the single-TRP measurement assumption. In this case, the NZP CSI-RS resource set includes M single-TRP measurement assumptions.

The NZP CSI-RS resources included in the NZP CSI-RS resource set are used for channel measurement. To help the network device perform scheduling, the UE further needs to consider an interference status when performing CSI measurement, that is, needs to perform interference estimation based on the IMR. In the NR, the network device further configures, for the UE, a resource set that includes a plurality of IMRs and that is used for interference measurement. The IMR may be a channel state information-interference measurement (channel state information-interference measurement, CSI-IM) resource, or an NZP CSI-RS resource used for interference measurement. However, in NCJT scheduling, interference mainly includes interference other than TRPs that participate in coordinated NCJT sending. Therefore, in NCJT CSI measurement of Release-17, interference estimation is based only on the CSI-IM resource. That is, in the foregoing NCJT CSI estimation, interference is completed by the network device by configuring the channel state information-interference measurement CSI-IM resource.

The NZP CSI-RS resource may be periodic, semi-persistent, or aperiodic.

For example, the NZP CSI-RS resource may be periodic (Periodic), and the NZP CSI-RS is sent on the periodic NZP CSI-RS resource according to a specific periodicity.

For example, the NZP CSI-RS resource may be semi-persistent (Semi-persistent), and the network device may activate or deactivate, by using downlink signaling, sending of the NZP CSI-RS on the semi-persistent NZP CSI-RS resource. In an active period, the NZP CSI-RS resource is periodic, and the semi-persistent NZP CSI-RS resource may be understood as a periodic NZP CSI-RS resource to which a window is added.

For example, the NZP CSI-RS resource may be aperiodic (Aperiodic), and the network device activates, by using downlink signaling, sending of the NZP CSI-RS once on the aperiodic NZP CSI-RS resource.

To match the foregoing measurement mechanism, NR Release-17 stipulates that: Based on the foregoing measurement resource configuration, the network side may configure the UE to include the following information in one CSI report:

an option 1: X pieces of CSI of the single-TRP measurement assumption and one piece of CSI of the NCJT measurement assumption, where X may be 0, 1, or 2; and
an option 2: one piece of CSI, where the CSI is obtained through measurement based on one assumption in all the single-TRP measurement assumptions and the NCJT measurement assumption.

The CSI includes one or more of CSI-RS resource indication information (CSI-RS resource indicator, CRI), a rank indicator (rank indicator, RI), a channel quality indicator (channel quality indicator, CQI), a precoding matrix indicator (precoding matrix indicator, PMI), and a layer indicator (layer indicator, LI).

The CRI indicates an NZP CSI-RS resource or a channel measurement resource pair. The RI indicates a rank value. The CQI indicates channel quality. The PMI indicates precoding matrix information. The layer indicator indicates layer information. Specific information included in the CSI is based on network configuration.

(4) Weakness

In Release-15/16, slots in which different NZP CSI-RS resources in a same NZP CSI-RS resource set are located may be the same or may be different.

In NCJT measurement, a UE receives reference signals on two NZP CSI-RS resources included in a same channel measurement resource pair, and performs joint channel estimation based on the NCJT measurement assumption on the reference signals received on the two NZP CSI-RS resources. When the two NZP CSI-RS resources are located in different slots, and uplink sending occurs between the two slots, there is a phase difference between reference signals received by the UE on the two NZP CSI-RS resources.

For example, in an actual radio frequency process, due to a hardware constraint, each time the UE starts downlink receiving, there is a start random phase. When the two NZP CSI-RS resources are located in different slots, and uplink sending occurs between the two slots, when a reference signal is received on an NZP CSI-RS resource in the second slot, because there is uplink-downlink switching previously, the UE restarts downlink receiving, and therefore a new random phase exists. The new random phase is usually different from a random phase on an NZP CSI-RS resource in the first slot.

When the NCJT sending is performed, signals that are from two TRPs and that are simulated by the reference signals on the two NZP CSI-RS resources are in a same slot. In other words, random phases of the signals from the two TRPs are the same, and there is no phase difference. However, the phase difference in channel estimation causes inter-stream interference in reference signal estimation performed by the UE on the two NZP CSI-RS resources included in the same channel measurement resource pair, and a deviation occurs.

It is assumed that channel parameters obtained on the two NZP CSI-RS resources are respectively represented by $\Phi1*H1$ and $\Phi2*H2$. For the terminal, the channel parameters are a whole, and $\Phi$ and H cannot be distinguished. $\Phi1$ represents a phase on one resource, $\Phi2$ represents a phase on the other resource, and H1 and H2 represent physical channel parameters between the two TRPs and the UE. H1 and H2 are matrices of $Nr \times Nt$, and Nr indicates a quantity of receive antenna ports of the UE. It is assumed that quantities of transmit antenna ports of the two TRPs are the same, and are both represented by Nt. Φ1 is a diagonal matrix of Nr×Nr, and elements on the diagonal are {$e^{j\theta 1,a}$, $a$ = 1, 2, ..., $N_r$}. Φ2 is also a diagonal matrix of Nr×Nr, and elements on the diagonal are {$e^{j\theta 2,b}$, $b$ = 1, 2, ..., $N_r$}, where $\theta_a$ and $\theta_b$ are random phases that occur when a radio frequency link of the UE is started, and the phases are completely random.

It should be noted that, in the foregoing assumption, it is assumed that the two NZP CSI-RS resources come from different TRPs. Therefore, it is actually assumed that the quantities of sending antenna ports of the two TRPs are both Nt. Currently, in the discussion of Release-17, to simplify processing complexity of the UE, quantities of ports of NZP CSI-RS resources in a same channel measurement resource set are actually limited to being the same. To obtain the inter-stream interference under the NCJT measurement assumption, Φ1H1 and Φ2H2 may be combined into a new matrix [Φ1H1 Φ2H2], which is a matrix of Nr×2Nt, and a covariance matrix R thereof may be expressed as:

$$\mathbf{R} = [\mathbf{\Phi}_1\mathbf{H}_1 \quad \mathbf{\Phi}_2\mathbf{H}_2]^H[\mathbf{\Phi}_1\mathbf{H}_1 \quad \mathbf{\Phi}_2\mathbf{H}_2] = \begin{bmatrix} \mathbf{H}_1^H\mathbf{H}_1 & \mathbf{H}_1^H\mathbf{\Phi}_1^H\mathbf{\Phi}_2\mathbf{H}_2 \\ \mathbf{H}_2^H\mathbf{\Phi}_2^H\mathbf{\Phi}_1\mathbf{H}_1 & \mathbf{H}_2^H\mathbf{H}_2 \end{bmatrix}.$$

It is assumed that precoders obtained through estimation based on Φ1H1 and Φ2H2 are W1 and W2, and then inter-stream interference strength estimated according to the foregoing formula is:

$$\|\mathbf{W}_1^H\mathbf{H}_1^H\mathbf{\Phi}_1^H\mathbf{\Phi}_2\mathbf{H}_2\mathbf{W}_2\|^2 = \left\|\mathbf{W}_1^H\mathbf{H}_1^H\begin{bmatrix} e^{j(\theta_{2,1}-\theta_{1,1})} & \cdots & 0 \\ \vdots & \ddots & \vdots \\ 0 & \cdots & e^{j(\theta_{2,N_r}-\theta_{1,N_r})} \end{bmatrix}\mathbf{H}_2\mathbf{W}_2\right\|^2.$$

A diagonal matrix is introduced because there is a phase difference on the two NZP CSI-RS resources in the foregoing estimated inter-stream interference:

$$\begin{bmatrix} e^{j(\theta_{2,1}-\theta_{1,1})} & \cdots & 0 \\ \vdots & \ddots & \vdots \\ 0 & \cdots & e^{j(\theta_{2,N_r}-\theta_{1,N_r})} \end{bmatrix}.$$

The UE obtains the estimated channel quality indicator CQI based on a signal to interference plus noise ratio (signal-to-interference-plus-noise ratio, SINR):

$$\text{SINR} = \frac{S}{I_{inter-layer} + I_{inter-cell} + N}$$

where $I_{inter-layer}$ is the inter-stream interference, and $I_{inter-cell}$ is inter-cell interference.

After receiving the CQI fed back by the UE, the network device selects, based on a CQI value, a parameter for performing NCJT transmission, for example, a code rate or a modulation order. In NCJT-based PDSCH transmission, actual inter-stream interference strength should be $\|\mathbf{W}_1^H\mathbf{H}_1^H\mathbf{H}_2\mathbf{W}_2\|^2$. A reason why the foregoing phase difference does not exist is that, in the NCJT-based PDSCH transmission, signals of two TRPs are in a same slot. Therefore, in this case, Φ1=Φ2. Mismatch between CSI estimation and actual transmission causes inaccurate CSI feedback, and greatly reduces NCJT transmission performance.

In other words, when the two NZP CSI-RS resources of the same channel measurement resource pair are located in different slots, and there is uplink-downlink switching between the two slots, inter-stream interference estimated in channel estimation introduces a phase difference that does not exist in the actual NCJT transmission, and further causes NCJT transmission performance deterioration.

It should be noted that, in the foregoing analysis, CSI estimation based on the non-coherent joint transmission NCJT measurement assumption is used for analysis. Actually, a similar problem also exists in CSI estimation based on coherent joint transmission (coherent JT). A difference between the coherent JT and the NCJT lies in that: in the NCJT, different data streams come from different TRPs, but in the coherent JT, a same data stream comes from different TRPs. Therefore, in the coherent JT, when there are different phase differences between TRPs that send a same data stream, this causes inter-stream interference that leads to inaccurate CQI estimation, and also causes inaccurate precoding matrix indicator PMI estimation. Consequently, the problem becomes more complex and serious.

In conclusion, the foregoing problem is common in a multi-transmission point transmission mode. Provided that uplink-downlink switching exists between transmission resources on which reference signals from a plurality of transmission points are located, there is random phase difference when the UE receives the reference signals from the plurality of transmission points on the transmission resources, and CSI parameter estimation based on the reference signals with the random phase difference is inaccurate.

Based on this, this application provides a plurality of solutions, to avoid a case in which CSI parameter estimation is inaccurate due to a phase difference between a plurality of (two or more) NZP CSI-RS resources in a same channel measurement resource pair caused by uplink-downlink switching in multi-TRP transmission.

The following describes the solutions in detail with reference to the accompanying drawings. Features or content denoted by dashed lines in the accompanying drawings may be understood as optional operations or optional structures in embodiments of this application.

The configuration in this application may be equivalent to an indication.

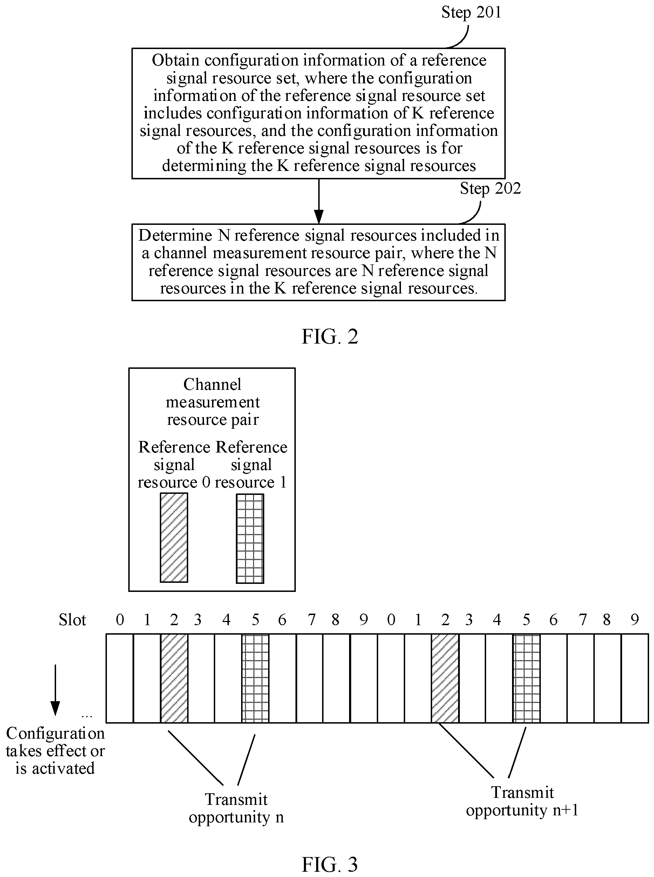

As shown in FIG. 2, a reference signal resource determining method is provided. The method includes the following steps.

Step 201: A terminal device obtains configuration information of a reference signal resource set, where the configuration information of the reference signal resource set includes configuration information of K reference signal resources, the configuration information of the K reference signal resources is for determining the K reference signal resources, and K is a positive integer.

The terminal device may determine, based on the configuration information of the K reference signal resources, the K reference signal resources used for channel measurement, where K is a positive integer. For example, one reference signal resource may be determined based on one piece of configuration information of the reference signal resource.

It may be configured, based on the configuration information of the reference signal resource set, that slots in which one or at least two reference signal resources are located are different slots. Alternatively, it may be configured, based on the configuration information of the reference signal resource set, that there is an uplink symbol in a first interval of at least two reference signal resources.

In an optional example, slots in which the K reference signal resources are located are a same slot. In this way, the foregoing problem of the phase difference caused by uplink-downlink switching can be resolved. However, because too many reference signal resources are centralized in a same slot, a quantity of reference signal resources that can be configured is limited, which causes performance deterioration of the entire network.

In an optional example, slots in which at least two of the K reference signal resources are located are different slots. When the at least two reference signal resources are in different slots, a problem of a phase difference caused by uplink-downlink switching may be further avoided in another manner. A case in which the at least two of the K reference signal resources are located in different slots has more flexible reference signal resource configuration compared with a case in which the at least two of the K reference signal resources are located in a same slot. In this way, performance deterioration of the entire network caused by excessive limitation on reference signal resources for resolving the foregoing problem can be avoided.

In an optional example, there is an uplink symbol in a first interval of at least two of the K reference signal resources.

Examples in which the terminal device obtains the configuration information of the reference signal resource set are as follows.

In an example, the terminal device receives the configuration information of the reference signal resource set that includes the configuration information of the K reference signal resources and that is sent by the network device.

In an example, the terminal device receives one piece of signaling (where the signaling may also be referred to as CSI configuration information). The CSI configuration information indicates the configuration information of (associated with) the reference signal resource set, and the configuration information of the reference signal resource set includes the configuration information of the K reference signal resources. It may be understood that the CSI configuration information indicates the terminal device to use some previously configured reference signal resource sets as to-be-obtained reference signal resource sets in step 201.

For example, the configuration information of the reference signal resource set includes configuration information of K' reference signal resources, and the UE may determine, based on the configuration information of the K' reference signal resources, the K' reference signal resources for channel measurement, where K' is a positive integer greater than or equal to K.

The K reference signal resources are K reference signal resources determined from the K' reference signal resources based on the signaling (where the signaling may also be referred to as the CSI configuration information), or the K reference signal resources are K reference signal resources determined from the K' reference signal resources according to a preset rule.

For example, in NR, the CSI configuration information is sent by using RRC signaling, for example, may be RRC signaling CSI-MeasConfig, or the CSI configuration information is RRC signaling CSI-ReportConfig.

For example, the CSI configuration information is the CSI-MeasConfig, the CSI-MeasConfig includes CSI report configuration information, and the CSI report configuration information includes CSI-ResourceConfigId. One or more reference signal resource sets may be determined based on CSI-ResourceConfig corresponding to the CSI-ResourceConfigId.

For example, when a reference signal resource type determined based on the CSI-ResourceConfig is periodic or semi-persistent, one reference signal resource set is determined based on the CSI-ResourceConfig.

For example, when the reference signal resource type determined based on the CSI-ResourceConfig is aperiodic, a plurality of reference signal resource sets are determined based on the CSI-ResourceConfig.

When a type of a reference signal resource associated with a reference signal resource set is periodic or semi-persistent, configuration information of the reference signal resource may be used to configure a periodicity and a slot offset of the reference signal resource. For example, the configuration information of the reference signal resource includes a parameter periodicityAndOffset, and the parameter is used to configure the periodicity and the slot offset of the reference signal resource. Based on the periodicity and the slot offset, a slot in which each transmit opportunity of the reference signal resource is located may be determined. Specifically, the UE assumes that a reference signal is transmitted in a slot whose number is $n_{s,f}^{\mu}$, where $n_{s,f}^{\mu}$ meets the following formula:

$$\left(N_{slot}^{frame,\mu}n_f + n_{s,f}^{\mu} - T_{offset}\right) \bmod T_{CSI-RS} = 0 \qquad (1)$$

$N_{slot}^{frame,\mu}$ is determined according to the following Table 1, where $\mu$ is used to determine the subcarrier spacing, and is configured by the network device; $n_f$ represents a frame number; and $T_{offset}$ and $T_{CSI-RS}$ are the slot offset and the periodicity that are configured by the network device.

**Table 1**

| $\mu$ | $N_{slot}^{frame,\mu}n_f$ |
|---|---|
| 0 | 10 |
| 1 | 20 |
| 2 | 40 |
| 3 | 80 |
| 4 | 160 |

RRC signaling is generally carried by a PDSCH. After receiving the PDSCH, the UE needs to perform receiving and decoding on the PDSCH. After the decoding is complete, the UE needs to perform corresponding configuration based on signaling content. This process takes a specific period of time. After the foregoing operations are completed, the UE may perform corresponding actions based on the RRC signaling, and the RRC signaling formally takes effect. After the RRC signaling configured on the network side takes effect, according to the foregoing described formula (1), the UE assumes that there is one transmit opportunity of the reference signal every $T_{CSI-RS}$ slots. As shown in FIG. 3, a reference signal resource 0 and a reference signal resource 1 belong to a same channel measurement resource pair, and the reference signal resource 0 and the reference signal resource 1 have a same periodicity, where the periodicity is 10 slots, that is, $T_{CSI-RS}$ = 10. A slot offset of the reference signal resource 0 is 2, that is, $T_{offset}$ = 2; and a slot offset of the reference signal resource 1 is 5, that is, $T_{offset}$ = 5. For sending of a reference signal in an $n^{th}$ periodicity of the reference signal resource 0, the reference signal resource 0 in the $n^{th}$ periodicity herein may be an $n^{th}$ transmit opportunity of a reference signal 1. Similarly, for sending of the reference signal in an $(n+1)^{th}$ periodicity of the reference signal resource 1, the reference signal resource 1 in the $(n+1)^{th}$ periodicity herein may be an $(n+1)^{th}$ transmit opportunity of a reference signal 2.

When the reference signal resource type associated with the reference signal resource set is aperiodic, the reference signal has only one transmit opportunity on each reference signal resource, and slots in which a plurality of reference signal resources in a same reference signal resource set are located are a same slot.

This application defines intervals of a plurality of reference signal resources. The following first describes the first interval in time domain, and last describes the last interval in time domain. An end symbol may be a start moment of the end symbol, or may be an end moment of the end symbol. A start symbol may be a start moment of the start symbol, or may be an end moment of the start symbol.

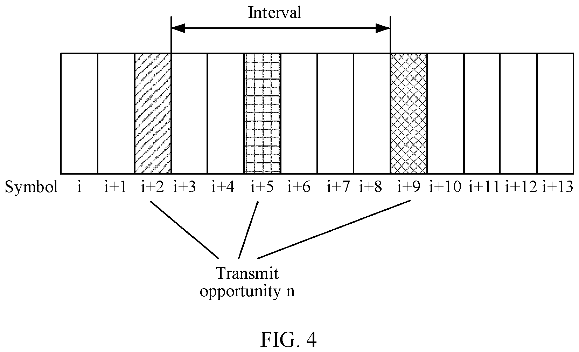

For example, in a same transmit opportunity of a plurality of reference signal resources in a same reference signal resource set, a time range from an end symbol of the first reference signal resource to a start symbol of the last reference signal resource is defined as an interval of the plurality of reference signal resources in the same reference signal resource set in the same transmit opportunity. As shown in FIG. 4, in a same transmit opportunity of a plurality of reference signal resources in a same reference signal resource set, a time range from an end moment of an end symbol of the first reference signal resource to a start moment of a start symbol of the last reference signal resource is defined as an interval of the plurality of reference signal resources in the same reference signal resource set in the same transmit opportunity.

For example, in a same transmit opportunity of a plurality of reference signal resources in a same reference signal resource set, a time range from a start symbol of the first reference signal resource to an end symbol of the last reference signal resource is defined as an interval of the plurality of reference signal resources in the same reference signal resource set in the same transmit opportunity.

For example, in a same transmit opportunity of a plurality of reference signal resources in a same reference signal resource set, a time range from a start symbol of the first reference signal resource to a start symbol of the last reference signal resource is defined as an interval of the plurality of reference signal resources in the same reference signal resource set in the same transmit opportunity.

For example, in a same transmit opportunity of a plurality of reference signal resources in a same reference signal resource set, a time range from an end symbol of the first reference signal resource to an end symbol of the last reference signal resource is defined as an interval of the plurality of reference signal resources in the same reference signal resource set in the same transmit opportunity.

The first interval mentioned in this application is an interval between at least two of the K reference signal resources. The second interval is an interval of the N reference signal resources.

For example, the first interval is a time range from an end symbol of a first reference signal resource to a start symbol of a second reference signal resource, the first reference signal resource and the second reference signal resource are associated with a same transmit opportunity, the first reference resource is the earliest reference signal resource in the at least two reference signal resources, and the second reference resource is the last reference signal resource in the at least two reference signal resources.

For example, the second interval is a time range from an end symbol of a third reference signal resource to a start symbol of a fourth reference signal resource, the third reference signal resource and the fourth reference signal resource are associated with a same transmit opportunity, the third reference resource is the earliest reference signal resource in the N reference signal resources, and the fourth reference resource is the last reference signal resource in the N reference signal resources.

The third interval is a time range between a first reference signal transmit opportunity of a fifth reference signal resource and a second reference signal transmit opportunity of a sixth reference signal resource, neither of the first reference signal transmit opportunity and the second reference signal transmit opportunity is later than a CSI reference resource, the first reference signal transmit opportunity is one or more reference signal transmit opportunities closest to the CSI reference resource in reference signal transmit opportunities of the fifth reference signal resource, the second reference signal transmit opportunity is one or more reference signal transmit opportunities closest to the CSI reference resource in reference signal transmit opportunities of the sixth reference signal resource, the fifth reference resource is a reference signal resource in the N reference signal resources, and the sixth reference resource is a reference signal resource in the N reference signal resources.

Optionally, a slot in which the first reference signal transmit opportunity is located and a slot in which the second reference signal transmit opportunity is located are consecutive slots.

Step 202: The terminal device determines N reference signal resources included in a channel measurement resource pair, where the N reference signal resources are N reference signal resources in the K reference signal resources, and N is a positive integer less than or equal to K and greater than 1.

The reference signal resource set may support one or more channel measurement resource pairs. The determining N reference signal resources included in the channel measurement resource pair in step 202 may be understood as determining N reference signal resources included in each of the one or more channel measurement resource pairs supported by the reference signal resource set. If a plurality of channel measurement resource pairs are supported, N reference signal resources corresponding to different channel resource measurement pairs are usually different. For example, two channel resource measurement pairs are supported, including N1 and N2 reference signal resources respectively. The N1 reference signal resources and the N2 reference signal resources are usually different.

Optionally, the configuration information of the reference signal resource set may indicate a quantity P of channel measurement resource pairs supported by the reference signal resource set, where P is an integer greater than or equal to 1. Alternatively, the quantity P of channel measurement resource pairs supported by the reference signal resource set is indicated by other signaling (for example, the CSI configuration information).

When the terminal device determines the N reference signal resources, the terminal device may receive first signaling, where the first signaling indicates the N reference signal resources; and/or determine the N reference signal resources from the K reference signal resources according to a preset rule.

The first signaling herein may be included in the CSI configuration information, or included in the configuration information of the reference signal resource set.

The N reference signal resources included in the channel measurement resource pair are determined from the K reference signal resources based on the CSI configuration information or the configuration information of the reference signal resource set (for example, the first signaling), or according to a preset rule, where N is a positive integer less than or equal to K and greater than 1.

It may be understood that, each channel measurement resource pair includes two reference signal (for example, NZP CSI-RS) resources or more than two reference signal (for example, NZP CSI-RS) resources. For ease of description, the following uses an example in which each channel measurement resource pair includes two reference signal (for example, NZP CSI-RS) resources for description. A case in which each channel measurement resource pair includes more than two reference signal (for example, NZP CSI-RS) resources also falls within the protection scope of this application.

Examples of determining, from the K reference signal resources, the N reference signal resources included in the channel measurement pair is as follows.

Example 1: The channel measurement resource pair is determined from the K reference signal resources based on the first signaling included in the CSI configuration information or the configuration information of the reference signal resource set.

For example, the first signaling may indicate a quantity P of channel measurement resource pairs and P bitmaps with lengths of K, where K represents a quantity of reference signal resources included in the reference signal resource set. 0 in the bitmap indicates that a corresponding reference signal resource can be used as a reference signal resource corresponding to a measurement resource, and 1 indicates that a corresponding reference signal resource cannot be used as a reference signal resource corresponding to a measurement resource. Alternatively, 0 in the bitmap indicates that a corresponding reference signal resource cannot be used as a reference signal resource corresponding to a measurement resource, and 1 indicates that a corresponding reference signal resource can be used as a reference signal resource corresponding to a measurement resource.

For example, the reference signal resource set includes four (that is, K=4) reference signal resources: {#0, #1, #2, #3}. The first signaling includes P=1 and bitmaps 0011, and reference signal resources corresponding to #0 and #1 constitute one channel measurement resource pair.

Example 2: The channel measurement resource pair is determined from the K reference signal resources according to a preset rule.

For example, the preset rule is that: when the reference signal resource set includes two (K=2) reference signal resources, the two reference signal resources constitute one channel measurement resource pair. For example, if the two reference signal resources are {#0, #1}, the reference signal resources corresponding to #0 and #1 constitute one channel measurement resource pair.

The preset rule is that: two adjacent reference signal resources in the K reference signal resources are combined into one channel measurement resource pair. For example, the reference signal resource set includes six (K=6) reference signal resources: {#0, #1, #2, #3, #4, #5}. In this case, the reference signal resources #0 and #1 constitute a channel measurement resource pair, the reference signal resources #2 and #3 constitute another channel measurement resource pair, and the reference signal resources #4 and #5 constitute another channel measurement resource pair.

Example 3: Example 1 and Example 2 are combined to determine the channel measurement resource pair.

For example, the channel measurement resource pair is determined from the K reference signal resources based on the first signaling included in the CSI configuration information or the configuration information of the reference signal resource set and according to a preset rule.

For example, the first signaling indicates a quantity P of channel measurement resource pairs, and the preset rule is that: adjacent two (or may be understood as two-by-two) of the first 2P reference signal resources in the K reference signal resources are combined into the P channel measurement resource pairs. For example, the reference signal resource set includes six (K=6) reference signal resources: {#0, #1, #2, #3, #4, #5}, and the first signaling indicates that P=2. In this case, the reference signal resources #0 and #1 constitute a channel measurement resource pair, and the reference signal resources #2 and #3 constitute another channel measurement resource pair.

The following describes several manners of avoiding phase inconsistency.

In the following Manner 1 to Manner 6, the terminal device may receive a reference signal on the N reference signal resources; and/or report a CSI report associated with the N reference signal resources. It may be understood that in Manner 1 to Manner 6, phase inconsistency is avoided through configuration. One channel measurement resource pair is associated with one CSI report.

It should be noted that when a type of the CSI report is configured to be an option 2 (that is, the option 2 described above: one piece of CSI, where the CSI is obtained through measurement based on one of all the single-TRP measurement assumptions and the NCJT measurement assumption), the UE should determine the one piece of CSI based on the single-TRP measurement assumptions and the NCJT measurement assumption, and report the CSI to the network device. Therefore, CSI included in the final CSI reporting is not necessarily CSI obtained by measuring the N reference signal resources included in the channel measurement resource pair, but may be CSI associated with the K reference signal resources or one reference signal resource in K reference signal resource subsets, that is, CSI measured based on the single TRP assumption. However, the foregoing CSI determined by comparing a plurality of pieces of CSI that are separately obtained through measurement on all assumptions, to be specific, the K reference signal resources or the K reference signal resource subsets and the determined channel measurement resource pair. Therefore, the foregoing CSI report should also be understood as having an association relationship with the N reference signal resources included in the channel measurement resource pair.

Manner 1:

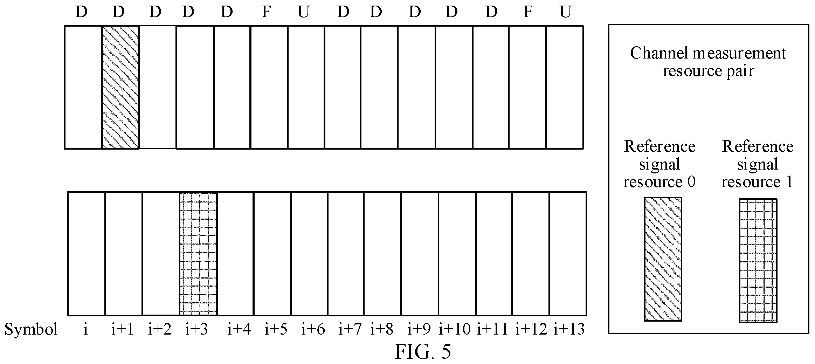

There is no uplink symbol (U) and/or flexible symbol (F) in a second interval of the N reference signal resources.
N reference signal resources included in one channel measurement resource pair may be in different slots or in a same slot.
As shown in FIG. 5, N=2. A reference signal resource 0 and a reference signal resource 1 are in a same slot, and respectively correspond to symbols i+1 and i+3. There are only downlink symbols (D) in an interval between i+1 and i+3, and there is no uplink symbol (U) or flexible symbol (F) in the interval between i+1 and i+3.
In the K reference signal resources, there may be no uplink symbol in an interval of at least two reference signal resources. In this case, within a current transmit opportunity (a transmit opportunity that exists in an interval of two reference signal resources and in which there is no uplink symbol), the UE receives reference signals on the N reference signal resources included in the channel measurement resource pair, and reports a CSI report associated with the N reference signal resources.
For example, K=4, that is, there are four reference signal resources: {#0, #1, #2, #3}. The channel measurement resource pair includes the reference signal resources {#0, #1}, and there is neither an uplink symbol nor a flexible symbol/either no uplink symbol or no flexible symbol in an interval of the reference signal resources {#0, #1}. In this case, no uplink-downlink switching occurs between the reference signal resources {#0, #1}, and the problem of phase inconsistency does not occur. In addition, to avoid difficulty in implementing configuration of the network device due to excessive limitations, in this case, there may be an uplink symbol and/or a flexible symbol in an interval of a plurality of reference signal resources other than the interval of the reference signal resources {#0, #1}. For example, there may be an uplink symbol and/or a flexible symbol in an interval of the reference signal resources {#0, #2}, an interval of the reference signal resources {#0, #3}, or an interval of the reference signal resources {#0, #2, #3}. This greatly improves configuration flexibility of the network device.

Manner 2:

There is an uplink symbol in a second interval of the N reference signal resources, and uplink transmission is not performed on the uplink symbol.
In other words, the UE is limited to only performing receiving, or performing neither receiving nor sending between symbols in which a plurality of reference signal (for example, NZP CSI-RS) resources of a same channel measurement resource pair are located. Not performing uplink transmission may be not sending, or may be zero-power, or not sending a valid signal/information.
The UE does not require sending on the foregoing uplink symbol. In this case, no uplink-downlink switching occurs between the N reference signal resources. Similarly, the problem of phase inconsistency does not occur. In this case, within the current transmit opportunity, the UE receives reference signals on the N reference signal resources included in the channel measurement resource pair, and reports a CSI report associated with the N reference signal resources.

Manner 3:

The N reference signal resources are in a same slot, and a reference signal resource type associated with the reference signal resource set is periodic or semi-persistent.
In other words, a plurality of (N) reference signal resources of a same channel measurement resource pair are limited to being located in a same slot.
The UE receives reference signals on the N reference signal resources included in the channel measurement resource pair, and reports a CSI report associated with the N reference signal resources.

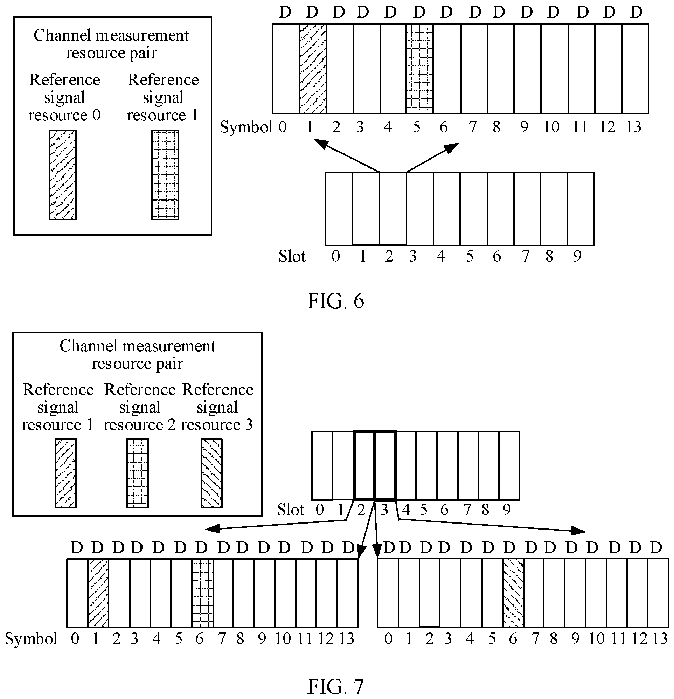

As shown in FIG. 6, N=2. A reference signal resource 0 and a reference signal resource 1 are in a same slot, and respectively correspond to symbols 1 and 5. There are only downlink symbols (D) in an interval between the symbols 1 and 5, and there is no uplink symbol (U) or flexible symbol (F) in the interval between the symbols 1 and 5.

For example, K=4, that is, there are four reference signal resources: {#0, #1, #2, #3}. The channel measurement resource pair includes the reference signal resources {#0, #1}, and the reference signal resources {#0, #1} are in a same slot. In this case, a probability of uplink-downlink switching between the reference signal resources {#0, #1} is very low, and the problem of phase inconsistency is greatly alleviated. In addition, to avoid difficulty in implementing configuration of the network device due to excessive limitations, in this case, slots in which any plurality of reference signal resources other than the reference signal resources {#0, #1} are located may be the same or different. For example, slots in which the reference signal resources {#0, #2} are located, slots in which the reference signal resources {#0, #3} are located, or slots in which the reference signal resources {#0, #2, #3} are located may be the same or different. This greatly improves configuration flexibility of the network device.

Manner 4:

The N reference signal resources are in Q slots, where Q is a positive integer less than or equal to N and greater than or equal to 1. When Q is greater than 1, the Q slots are consecutive slots (continuous in time), and the Q slots include only a downlink symbol and/or a flexible symbol.

The Q slots include only a downlink symbol and/or a flexible symbol. For example, the Q slots may include only downlink symbols, that is, all downlink symbols. For another example, the Q slots include only downlink symbols and flexible symbols, that is, a part of downlink symbols and a part of flexible symbols. For another example, the Q slots include only flexible symbols, that is, all flexible symbols.

For example, a reference signal resource type associated with the reference signal resource set is periodic or semi-persistent.

The UE receives reference signals on the N reference signal resources included in the channel measurement resource pair, and reports a CSI report associated with the N reference signal resources.

As shown in FIG. 7, N=3, reference signal resources 1 and 2 are in a slot 2, a reference signal resource 3 is in a slot 3, and the slot 2 and the slot 3 are consecutive, and include only downlink symbols (D).

For example, K=4, that is, there are four reference signal resources: {#0, #1, #2, #3}. The channel measurement resource pair includes the reference signal resources {#1, #2, #3}, the reference signal resources {#1, #2} are in the slot 2, the reference signal resource {#3} is in the slot 3, the slot 2 and the slot 3 are consecutive slots, and the slot 2 and the slot 3 include only downlink symbols. Therefore, when the UE receives reference signals on the reference signal resources {#1, #2, #3}, there is no phase inconsistency problem.

Manner 5:

The N reference signal resources are in T slots, where T is a positive integer less than or equal to N and greater than 1, the T slots are inconsecutive slots, the T slots include only a downlink symbol and/or a flexible symbol, and a slot between the T slots includes only a downlink symbol and/or a flexible symbol.

The T slots include only a downlink symbol and/or a flexible symbol. For example, the T slots may include only downlink symbols, that is, all downlink symbols. For another example, the T slots include only downlink symbols and flexible symbols, that is, a part of downlink symbols and a part of flexible symbols. For another example, the T slots include only flexible symbols, that is, all flexible symbols.

For example, a reference signal resource type associated with the reference signal resource set is periodic or semi-persistent.

The UE receives reference signals on the N reference signal resources included in the channel measurement resource pair, and reports a CSI report associated with the N reference signal resources.

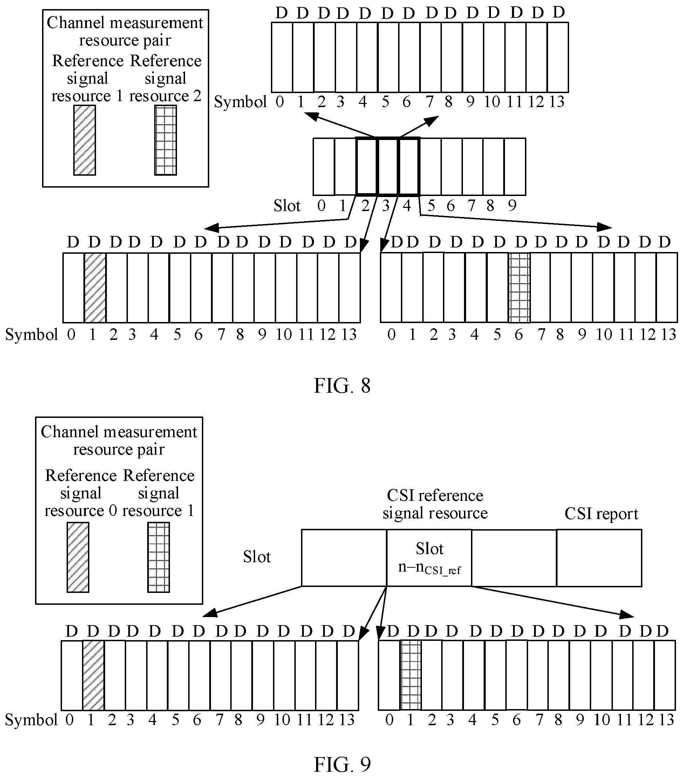

As shown in FIG. 8, N=2, a reference signal resource 1 is in a slot 2, a reference signal resource 2 is in a slot 4, the slot 2 and the slot 4 include only downlink symbols (D), and a slot 3 also includes only downlink symbols (D).

For example, K=4, that is, there are four reference signal resources: {#0, #1, #2, #3}. The channel measurement resource pair includes the reference signal resources {#1, #2}, the reference signal resource {#1} is in the slot 2, the reference signal resource {#2} is in the slot 4, the slot 2 and the slot 4 are inconsecutive slots, and the slot 2 and the slot 4 include only downlink symbols. Similarly, the slot 3 between the slot 2 and the slot 4 includes only downlink symbols. Therefore, when the UE receives reference signals on the reference signal resources {#1, #2}, there is no phase inconsistency problem.

Manner 6:

There is only a downlink symbol and/or a flexible symbol in a third interval of the N reference signal resources.

The third interval is a time range between a first reference signal transmit opportunity of a fifth reference signal resource and a second reference signal transmit opportunity of a sixth reference signal resource, neither of the first reference signal transmit opportunity and the second reference signal transmit opportunity is later than a CSI reference resource, the first reference signal transmit opportunity is one or more reference signal transmit opportunities closest to the CSI reference resource in reference signal transmit opportunities of the fifth reference signal resource, the second reference signal transmit opportunity is one or more reference signal transmit opportunities closest to the CSI reference resource in reference signal transmit opportunities of the sixth reference signal resource, the fifth reference resource is a reference signal resource in the N reference signal resources, and the sixth reference resource is a reference signal resource in the N reference signal resources.

Optionally, a slot in which the first reference signal transmit opportunity is located and a slot in which the second reference signal transmit opportunity is located are consecutive slots.

For example, there is only a downlink symbol and/or a flexible symbol between one or more reference signal transmit opportunities of each of the N reference signal resources.

The one or more reference signal transmit opportunities are not later than the CSI reference resource.

Alternatively, the one or more reference signal transmit opportunities are not later than the CSI reference resource, and the one or more reference signal transmit opportunities are closest to the CSI reference resource.

It may be understood that, the UE reports a CSI report associated with the N reference signal resources included in the channel measurement resource pair when the following condition is met.

For each reference signal resource, if the reference signal resource is periodic, there are a plurality of transmit opportunities of the reference signal resource; or if the reference signal resource is aperiodic, there is only one transmit opportunity of the reference signal resource.

For each reference signal resource, one or more transmit opportunities that are not later than the CSI resource may be found, or one or more transmit opportunities of the reference signal resource that are closest to the CSI reference resource and that are not later than the CSI resource may be found.

For each reference signal resource, if there are a plurality of transmit opportunities, there is neither an uplink symbol nor a flexible symbol/either no uplink symbol or no flexible symbol between the plurality of transmit opportunities. Further, optionally, there is neither an uplink symbol nor a flexible symbol/either no uplink symbol or no flexible symbol between all transmit opportunities corresponding to the N reference signal resources.

For each reference signal resource, if there is one transmit opportunity, there is neither an uplink symbol nor a flexible symbol/either no uplink symbol or no flexible symbol between N transmit opportunities corresponding to the N reference signal resources.

A slot in which the CSI reference resource is located is before an uplink slot in which the CSI report associated with the N reference signal resources is reported, a quantity of CSI reference resources is greater than or equal to the smallest quantity in specific quantities (for example, $4 \cdot 2^{\mu UL}$, $5 \cdot 2^{\mu UL}$, $\left\lfloor Z'/N_{symb}^{slot} \right\rfloor$ described below), and the slot in which the CSI reference resource is located is a valid downlink slot.

For example, when it is assumed that the uplink slot in which the CSI report is reported is a slot n, the slot in which the CSI reference resource is located may be $n-n_{CSI\_ref}$.

When the CSI report is periodic or semi-persistent, and the reference signal resource set includes one reference signal resource, $n_{CSI\_ref}$ may be a minimum value greater than or equal to $4 \cdot 2^{\mu UL}$, and the slot $n-n_{CSI\_ref}$ is a valid downlink slot, where $\mu_{UL}$ is for determining an uplink subcarrier spacing. $\mu_{UL}$ may be 0, 1, 2, or 3.

When the CSI report is periodic or semi-persistent, and the reference signal resource set includes a plurality of reference signal resources, $n_{CSI\_ref}$ may be a minimum value greater than or equal to $5 \cdot 2^{\mu UL}$, and the slot $n-n_{CSI\_ref}$ is a valid downlink slot.

When the CSI report is aperiodic, and downlink signaling triggering aperiodic reporting and reporting of the CSI report are not required to be in a same slot, $n_{CSI\_ref}$ may be a minimum value greater than or equal to $\left\lfloor Z'/N_{symb}^{slot} \right\rfloor$, and the slot $n-n_{CSI\_ref}$ is a valid downlink slot. A group of values may be predefined based on different measurement types and requirements. The group of values defines shortest time required by the UE to process different types of CSI measurements. A value of *Z'* belongs to the group of values, a unit of *Z'* is a quantity of symbols, $N_{symb}^{slot}$ represents a quantity of symbols included in one slot, and ⌊ ⌋ represents rounding down.

As shown in FIG. 9, N=2, the channel measurement resource pair includes a reference signal resource 0 and a reference signal resource 1, the reference signal resource 0 is in a slot before the slot in which the CSI reference resource is located, the reference signal resource 1 and the CSI reference resource are in a same slot, and there are only downlink symbols between transmit opportunities of the reference signal resource 0 and the reference signal resource 1. Therefore, a problem of phase inconsistency does not exist when the UE receives reference signals on the reference signal resource 0 and the reference signal resource 1. Therefore, the UE receives the reference signals on the reference signal resource 0 and the reference signal resource 1, and reports the CSI report associated with the N reference signal resources included in the channel measurement resource pair.

It should be noted that, in the definition of the CSI reference resource, a delay of processing the CSI by the UE is fully considered. Therefore, before the CSI reference resource, there is neither an uplink symbol nor a flexible symbol/either no uplink symbol or no flexible symbol condition between the closest one or more transmit opportunities of the N reference signal resources. This ensures that there is no phase consistency problem between at least one group of reference signal resources of the UE on the basis of a delay requirement of processing the CSI by the UE.

The following manner 7 may be understood as configuration at the network device side causing uplink-downlink switching between the N reference signal resources included in the channel measurement resource pair, so that the problem of phase inconsistency exists.

Manner 7:

(1) The UE may not receive a reference signal on at least one of the N reference signal resources.
(2) The UE does not report a CSI report having an association relationship with the N reference signal resources. This can prevent an uplink resource waste caused by invalid CSI reporting.
(3) The UE reports a CSI report that is not updated.

At least one of the foregoing three manners in the manner 7 may be selected.

That the reference signal is not received may be that the reference signal is not received, or that the reference signal is received but not used, and is not processed as a valid signal or information.

The CSI report that is not updated herein may be a CSI report that is reported last time and stored in a UE buffer, or may be an out-of-range CSI report, where a channel quality indicator CQI included in the out-of-range CSI report is 0. Because the CQI being 0 is an out-of-range value, when receiving the CSI report, a network device knows that the CSI report is an out-of-range CSI report. A main purpose of reporting the CSI report that is not updated is that: When a CSI report is transmitted together with other uplink data, if the CSI report is not reported, an uplink data capacity is reduced, and the UE needs to perform rate matching again, so that the uplink data can be accurately mapped to an uplink resource allocated by the network device. This process causes higher implementation complexity and higher power consumption for the UE.

The following describes several cases in which the problem of phase inconsistency exists in configuration of the N reference signal resources.

Case 1: A reference signal resource type associated with the reference signal resource set is periodic or semi-persistent, and reference signal resources are in a same transmit opportunity.

The N reference signal resources are associated with a same transmit opportunity, and there is a flexible symbol and/or an uplink symbol in symbols corresponding to the transmit opportunity.

A symbol corresponding to any one of the N reference signal resources included in the channel measurement resource pair is determining to be a flexible symbol.

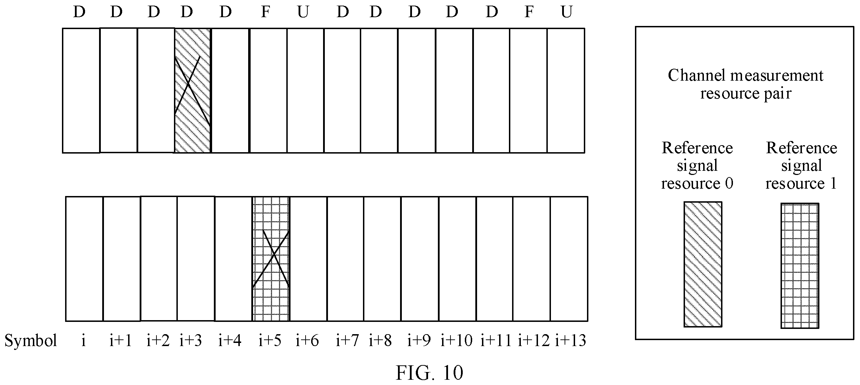

As shown in FIG. 10, N=2. Because a reference signal resource 1 in the channel measurement resource pair corresponds to a flexible symbol (F), the UE does not need to receive reference signals on a reference signal resource 0 and the reference signal resource 1.

The network device configures, for the UE by using higher layer signaling, a subframe structure including a flexible symbol. The network device may configure, by using higher layer signaling or physical layer signaling, the flexible symbol (F) configured in the subframe to be an uplink symbol (U) or a downlink symbol (D). A main reason for the foregoing specification is as follows: According to the current technology (for example, NR Release-15/16), for a periodic or semi-persistent reference signal resource, when a symbol in which the reference signal resource is located is a flexible symbol, the UE does not receive the reference signal resource.

If a channel measurement resource pair is received according to the current technology, if one or some reference signal resources in the channel measurement resource pair are on a flexible symbol, the UE does not receive the reference signal resource at this receive opportunity, but waits until a next receive opportunity to receive the reference signal resource. For example, if a reference signal resource 0 in a channel measurement resource pair is located on a downlink symbol in a first receive opportunity, receiving is performed; if a reference signal resource 1 in a channel measurement resource pair is located on a flexible symbol in the first receive opportunity, receiving is not performed;

or if the reference signal resource 1 is located on a downlink symbol in a second receive opportunity, the UE performs corresponding receiving. It can be learned that a symbol following a symbol in which the first receive opportunity of the reference signal resource 1 is located is an uplink symbol. This means that uplink-downlink switching exists between the symbol in which the first receive opportunity of the reference signal resource 0 is located and the symbol in which the second receive opportunity of the reference signal resource 1 is located, and the problem of phase inconsistency occurs.

Case 2: The reference signal resource type associated with the reference signal resource set is periodic or semi-persistent, and the N reference signal resources included in the channel measurement resource pair are in different slots.

Case 3: There is an uplink symbol and/or a flexible symbol in a second interval of the N reference signal resources included in the channel measurement resource pair.

In this case, in the current transmit opportunity, an interval of the N reference signal resources includes uplink-downlink switching. This causes the problem of phase inconsistency.

Case 4: There is an uplink symbol and/or a flexible symbol in a third interval of the N reference signal resources.

For example, there is an uplink symbol and/or a flexible symbol between one or more reference signal transmit opportunities of each of the N reference signal resources, where the one or more reference signal transmit opportunities are not later than the CSI reference resource, and the one or more reference signal transmit opportunities are closest to the CSI reference resource.

In an optional example, the UE reports first capability information, where the first capability information indicates that the UE supports a case in which the N reference signal resources included in the same channel measurement resource pair are located in different slots, or the first capability information indicates that the UE does not support a case in which the N reference signal resources included in the same channel measurement resource pair are located in different slots, or the first capability information indicates that the UE supports only a case in which the N reference signal resources included in the same channel measurement resource pair are located in different slots.

If the UE supports the case in which the N reference signal resources are located in different slots, the network side may configure the N reference signal resources included in the same channel measurement resource pair to be in different slots. If the UE does not support the case in which the N reference signal resources are located in different slots, the network side may configure the N reference signal resources included in the same channel measurement resource pair to be in a same slot.

In an optional example, the UE reports second capability information, where the second capability information indicates that the UE supports a case in which there is an uplink symbol and/or a flexible symbol in a second interval of the N reference signal resources included in the same channel measurement resource pair, or the second capability information indicates that the UE does not support a case in which there is an uplink symbol and/or a flexible symbol in a second interval of the N reference signal resources included in the same channel measurement resource pair, or the second capability information indicates that the UE supports only a case in which there is no uplink symbol in a second interval of the N reference signal resources included in the same channel measurement resource pair.

If the UE supports the case in which there is an uplink symbol and/or a flexible symbol in the second interval of the N reference signal resources included in the same channel measurement resource pair, the network side may configure that the second interval of the N reference signal resources included in the channel measurement resource pair includes an uplink symbol and/or a flexible symbol. If the UE does not support the case in which there is an uplink symbol and/or a flexible symbol in the second interval of the N reference signal resources included in the same channel measurement resource pair, the network side may configure that the second interval of the N reference signal resources included in the channel measurement resource pair does not include an uplink symbol and/or a flexible symbol.

In an optional example, the UE reports third capability information, where the third capability information indicates that the UE supports a case in which there is an uplink symbol and/or a flexible symbol in a third interval of the N reference signal resources included in the same channel measurement resource pair, or the third capability information indicates that the UE does not support a case in which there is an uplink symbol and/or a flexible symbol in a second interval of the N reference signal resources included in the same channel measurement resource pair, or the third capability information indicates that the UE supports only a case in which there is no uplink symbol in a third interval of the N reference signal resources included in the same channel measurement resource pair.

If the UE supports the case in which there is an uplink symbol and/or a flexible symbol in the third interval of the N reference signal resources included in the same channel measurement resource pair, the network side may configure that the third interval of the N reference signal resources included in the channel measurement resource pair includes an uplink symbol and/or a flexible symbol. If the UE does not support the case in which there is an uplink symbol and/or a flexible symbol in the third interval of the N reference signal resources included in the same channel measurement resource pair, the network side may configure that the third interval of the N reference signal resources included in the channel measurement resource pair does not include an uplink symbol and/or a flexible symbol.

The UE reports the capability information, to indicate whether the UE supports a case in which two reference signal resources included in a same channel measurement resource pair are in different slots, and/or to indicate whether the UE supports a case in which an uplink symbol exists between two reference signal resources included in a same channel measurement resource pair. The capability information is reported, so that the network device performs proper configuration for the terminal device.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, module division is an example, and is merely a logical function division. In a specific implementation, another division manner may be used.

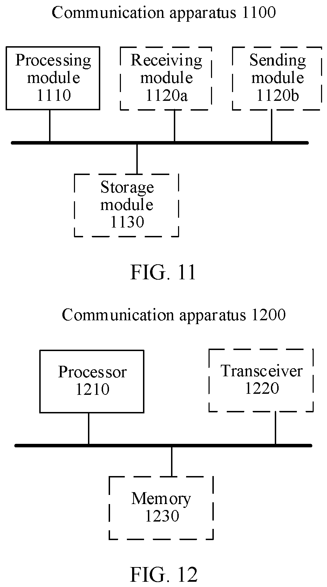

Based on the same technical idea as the foregoing method, FIG. 11 provides a schematic diagram of a structure of a communication apparatus 1100. The apparatus 1100 may include a processing module 1110, and optionally, may further include a receiving module 1120a, a sending module 1120b, and a storage module 1130. The processing module 1110 may be separately connected to the storage module 1130, the receiving module 1120a, and the sending module 1120b. The storage module 1130 may also be connected to the receiving module 1120a and the sending module 1120b.

In an example, the receiving module 1120a and the sending module 1120b may alternatively be integrated together, and are defined as a transceiver module.

In an example, the apparatus 1100 may be a terminal device, or may be a chip or a functional unit used in a terminal device. The apparatus 1100 has any function of the terminal device in the foregoing method. For example, the apparatus 1100 can perform the steps performed by the terminal device in the method in FIG. 2.

The receiving module 1120a may perform a receiving action performed by the terminal device in the foregoing method embodiment.

The sending module 1120b may perform a sending action performed by the terminal device in the foregoing method embodiment.

The processing module 1110 may perform another action than the sending action and the receiving action in the actions performed by the terminal device in the foregoing method embodiment.

In an example, the processing module 1110 is configured to: obtain configuration information of a reference signal resource set, where the configuration information of the reference signal resource set includes configuration information of K reference signal resources, the configuration information of the K reference signal resources is for determining the K reference signal resources, and K is a positive integer, where

slots in which at least two of the K reference signal resources are located are different slots, or there is an uplink symbol in a first interval of at least two of the K reference signal resources; and
determine N reference signal resources included in a channel measurement resource pair, where the N reference signal resources are N reference signal resources in the K reference signal resources, and N is a positive integer less than or equal to K and greater than 1.

In an example, the receiving module 1120a is configured to receive first signaling, where the first signaling indicates the N reference signal resources.

In an example, the processing module 1110 is configured to determine the N reference signal resources from the K reference signal resources according to a preset rule.

In an example, the sending module 1120b is configured to: receive a reference signal on the N reference signal resources; and/or report a CSI report associated with the N reference signal resources.

In an example, the storage module 1130 may store computer-executable instructions of the method performed by the terminal device, so that the processing module 1110, the receiving module 1120a, and the sending module 1120b perform the method performed by the terminal device in the foregoing examples.

For example, the storage module may include one or more memories. The memory may be a component configured to store a program or data in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 12 provides a schematic block diagram of a communication apparatus 1200.

The apparatus 1200 may include a processor 1210, and optionally, may further include a transceiver 1220 and a memory 1230. The transceiver 1220 may be configured to receive a program or instructions and transmit the program or instructions to the processor 1210. Alternatively, the transceiver 1220 may be configured to: perform communication interaction between the apparatus 1200 and another communication device, for example, exchange control signaling and/or service data. The transceiver 1220 may be a code and/or data read/write transceiver, or the transceiver 1220 may be a signal transmission transceiver between a processor and a transceiver. The processor 1210 and the memory 1230 are electrically coupled.

In an example, the apparatus 1200 may be a terminal device, or may be a chip used in a terminal device. It should be understood that the apparatus has any function of the terminal device in the foregoing method. For example, the apparatus 1200 can perform the steps performed by the terminal device in the method in FIG. 2. For example, the memory 1230 is configured to store a computer program or instructions. The processor 1210 may be configured to: invoke the computer program or instructions stored in the memory 1230, to perform the method performed by the terminal device in the foregoing examples, or perform, by using the transceiver 1220, the method performed by the terminal device in the foregoing examples.

As a possible product form, the apparatus may be implemented by using a general-purpose processor (also referred to as a chip or a chip system).

In a possible implementation, the general-purpose processor that implements the apparatus used in the terminal device includes: a processing circuit (also referred to as a processor); and optionally, further includes: an input/output interface and a storage medium (also referred to as a memory) that are connected to and communicate with the processing circuit internally. The storage medium is configured to: store instructions executed by the processing circuit, to perform the method executed by the terminal device in the foregoing examples.

The processing module 1110 in FIG. 11 may be implemented by using a processing circuit.

The receiving module 1120a and the sending module 1120b in FIG. 11 may be implemented by using an input/output interface. Alternatively, the input/output interface includes an input interface and an output interface. The input interface performs functions of the receiving module, and the output interface performs functions of the sending module.

The storage module 1130 in FIG. 11 may be implemented by using a storage medium.

As a possible product form, the apparatus in this embodiment of this application may be further implemented by using the following: one or more field programmable gate arrays (FPGAs), a programmable logic device (PLD), a controller, a state machine, a gate logic, a discrete hardware component, any other proper circuit, or any combination of circuits that can perform various functions described in this application.

An embodiment of this application further provides a computer-readable storage medium storing a computer program. When the computer program is executed by a computer, the computer may be enabled to perform the foregoing reference signal resource determining method. In other words, the computer program includes instructions for implementing the foregoing reference signal resource determining method.

An embodiment of this application further provides a computer program product including computer program code. When the computer program code is run on a computer, the computer is enabled to perform the reference signal resource determining method provided above.

An embodiment of this application further provides a communication system. The communication system includes a terminal and a network device that perform the foregoing reference signal resource determining method.

In addition, the processor mentioned in embodiments of this application may be a central processing unit (central processing unit, CPU) or a baseband processor, where the baseband processor and the CPU may be integrated or separated, or the processor may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate according to instructions of a corresponding processor. Optionally, the transmitter may correspond to a transmitter machine in a physical device, and the receiver may correspond to a receiver machine in the physical device.

A person of ordinary skill in the art may be aware that, the method steps and units described in embodiments disclosed in this specification may be implemented by electronic hardware, computer software, or a combination thereof. To clearly describe interchangeability between the hardware and the software, the foregoing has generally described the steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the current technology, or all or some of the technical solutions may be represented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that, in descriptions of this application, terms such as "first" and "second" are merely used for distinguishing and description, but should not be understood as an indication or implication of relative importance, or an indication or implication of a sequence. In this application, "configuration" may be equivalent to "indication".

Although some preferred embodiments of this application have been described, a person skilled in the art can make changes and modifications to these embodiments once they learn the basic inventive concept. Therefore, the following claims are intended to be construed as to cover the preferred embodiments and all changes and modifications falling within the scope of this application.

It is clear that, a person skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

**Claims**

1. A reference signal resource determining method, comprising:

   obtaining configuration information of a reference signal resource set, wherein the configuration information of the reference signal resource set comprises configuration information of K reference signal resources, the configuration information of the K reference signal resources is for determining the K reference signal resources, and K is a positive integer, wherein
   slots in which at least two of the K reference signal resources are located are different slots, or there is an uplink symbol in a first interval of at least two of the K reference signal resources; and
   determining N reference signal resources comprised in a channel measurement resource pair, wherein the N reference signal resources are N reference signal resources in the K reference signal resources, and N is a positive integer less than or equal to K and greater than 1.

2. The method according to claim 1, wherein the determining N reference signal resources comprised in a channel measurement resource pair comprises:

   receiving first signaling, wherein the first signaling indicates the N reference signal resources; and/or
   determining the N reference signal resources from the K reference signal resources according to a preset rule.

3. The method according to claim 1 or 2, further comprising:
   receiving a reference signal on the N reference signal resources; and/or reporting a CSI report associated with the N reference signal resources.

4. The method according to claim 3, wherein

   there is neither an uplink symbol nor a flexible symbol/either no uplink symbol or no flexible symbol in a second interval of the N reference signal resources;
   there is an uplink symbol in a second interval of the N reference signal resources, and uplink transmission is not performed on the uplink symbol;
   the N reference signal resources are in a same slot, and a reference signal resource type associated with the reference signal resource set is periodic or semi-persistent;
   the N reference signal resources are in Q slots, wherein Q is a positive integer less than or equal to N, the Q slots are consecutive slots, and the Q slots comprise only a downlink symbol and/or a flexible symbol;
   the N reference signal resources are in T slots, wherein T is a positive integer less than or equal to N, the T slots are inconsecutive slots, the T slots comprise only a downlink symbol and/or a flexible symbol, and a slot between the T slots comprises only a downlink symbol and/or a flexible symbol; or
   there is only a downlink symbol and/or a flexible symbol in a third interval of the N reference signal resources.

5. The method according to claim 1 or 2, wherein

   a reference signal is not received on at least one of the N reference signal resources;
   a CSI report associated with the N reference signal resources is not reported; and/or
   a CSI report that is not updated is reported.

6. The method according to claim 1, 2, or 5, wherein

   the N reference signal resources are associated with a same transmit opportunity, and there is a flexible symbol and/or an uplink symbol in symbols corresponding to the transmit opportunity;
   the N reference signal resources are in different slots, and a reference signal resource type associated with the reference signal resource set is periodic or semi-persistent;
   there is an uplink symbol and/or a flexible symbol in a second interval of the N reference signal resources; or
   there is an uplink symbol and/or a flexible symbol in a third interval of the N reference signal resources.

7. The method according to any one of claims 1 to 6, wherein the first interval is a time range from an end symbol of a first reference signal resource to a start symbol of a second reference signal resource, the first reference signal resource and the second reference signal resource are associated with a same transmit opportunity, the first reference resource is the earliest reference signal resource in the at least two reference signal resources, and the second reference resource is the last reference signal resource in the at least two reference signal resources.

8. The method according to any one of claims 4 to 7, wherein the second interval is a time range from an end symbol of a third reference signal resource to a start symbol of a fourth reference signal resource, the third reference signal resource and the fourth reference signal resource are associated with a same transmit opportunity, the third reference resource is the earliest reference signal resource in the N reference signal resources, and the fourth reference resource is the last reference signal resource in the N reference signal resources.

9. The method according to claim 4, 6, or 7, wherein the third interval is a time range between a first reference signal transmit opportunity of a fifth reference signal resource and a second reference signal transmit opportunity of a sixth reference signal resource, neither of the first reference signal transmit opportunity and the second reference signal transmit opportunity is later than a CSI reference resource, the first reference signal transmit opportunity is one or more reference signal transmit opportunities closest to the CSI reference resource in reference signal transmit opportunities of the fifth reference signal resource, the second reference signal transmit opportunity is one or more reference signal transmit opportunities closest to the CSI reference resource in reference signal transmit opportunities of the sixth reference signal resource, the fifth reference resource is a reference signal resource in the N reference signal resources, and the sixth reference resource is a reference signal resource in the N reference signal resources.

10. The method according to claim 9, wherein a slot in which the first reference signal transmit opportunity is located and a slot in which the second reference signal transmit opportunity is located are consecutive slots.

11. The method according to any one of claims 1 to 10, wherein the method further comprises:
sending first capability information, wherein the first capability information indicates that a terminal device supports a case in which the N reference signal resources are in different slots; the first capability information indicates that a terminal device does not support a case in which the N reference signal resources are in different slots; or the first capability information indicates that a terminal device supports only a case in which the N reference signal resources are in different slots.

12. The method according to any one of claims 1 to 10, wherein the method further comprises:
sending second capability information, wherein the second capability information indicates that a terminal device supports a case in which there is an uplink symbol in the second interval of the N reference signal resources; the second capability information indicates that a terminal device does not support a case in which there is an uplink symbol in the second interval of the N reference signal resources; or the second capability information indicates that a terminal device supports only a case in which there is no uplink symbol in the second interval of the N reference signal resources.

13. The method according to any one of claims 1 to 10, wherein the method further comprises:
sending third capability information, wherein the third capability information indicates that a terminal device supports a case in which there is an uplink symbol in the third interval of the N reference signal resources; the third capability information indicates that a terminal device does not support a case in which there is an uplink symbol in the third interval of the N reference signal resources; or the third capability information indicates that a terminal device supports only a case in which there is no uplink symbol in the third interval of the N reference signal resources.

14. A communication apparatus, comprising:
a processing module, configured to: obtain configuration information of a reference signal resource set, wherein the configuration information of the reference signal resource set comprises configuration information of K reference signal resources, the configuration information of the K reference signal resources is for determining the K reference signal resources, and K is a positive integer, wherein slots in which at least two of the K reference signal resources are located are different slots, or there is an uplink symbol in a first interval of at least two of the K reference signal resources; and determine N reference signal resources comprised in a channel measurement resource pair, wherein the N reference signal resources are N reference signal resources in the K reference signal resources, and N is a positive integer less than or equal to K and greater than 1.

15. The apparatus according to claim 14, wherein the processing module is configured to:

receive first signaling, wherein the first signaling indicates the N reference signal resources; and/or
determine the N reference signal resources from the K reference signal resources according to a preset rule.

**16.** The apparatus according to claim 14 or 15, further comprising:
a receiving module, configured to receive a reference signal on the N reference signal resources; and/or a sending module, configured to report a CSI report associated with the N reference signal resources.

**17.** The apparatus according to claim 16, wherein

there is neither an uplink symbol nor a flexible symbol/either no uplink symbol or no flexible symbol in a second interval of the N reference signal resources;
there is an uplink symbol in a second interval of the N reference signal resources, and uplink transmission is not performed on the uplink symbol;
the N reference signal resources are in a same slot, and a reference signal resource type associated with the reference signal resource set is periodic or semi-persistent;
the N reference signal resources are in Q slots, wherein Q is a positive integer less than or equal to N, the Q slots are consecutive slots, and the Q slots comprise only a downlink symbol and/or a flexible symbol;
the N reference signal resources are in T slots, wherein T is a positive integer less than or equal to N, the T slots are inconsecutive slots, the T slots comprise only a downlink symbol and/or a flexible symbol, and a slot between the T slots comprises only a downlink symbol and/or a flexible symbol; or
there is only a downlink symbol and/or a flexible symbol in a third interval of the N reference signal resources.

**18.** The apparatus according to claim 14 or 15, wherein

a reference signal is not received on at least one of the N reference signal resources;
a CSI report associated with the N reference signal resources is not reported; and/or
a CSI report that is not updated is reported.

**19.** The apparatus according to claim 14, 15, or 18, wherein

the N reference signal resources are associated with a same transmit opportunity, and there is a flexible symbol and/or an uplink symbol in symbols corresponding to the transmit opportunity;
the N reference signal resources are in different slots, and a reference signal resource type associated with the reference signal resource set is periodic or semi-persistent;
there is an uplink symbol and/or a flexible symbol in a second interval of the N reference signal resources; or
there is an uplink symbol and/or a flexible symbol in a third interval of the N reference signal resources.

**20.** The apparatus according to any one of claims 14 to 19, wherein the first interval is a time range from an end symbol of a first reference signal resource to a start symbol of a second reference signal resource, the first reference signal resource and the second reference signal resource are associated with a same transmit opportunity, the first reference resource is the earliest reference signal resource in the at least two reference signal resources, and the second reference resource is the last reference signal resource in the at least two reference signal resources.

**21.** The apparatus according to any one of claims 17 to 20, wherein the second interval is a time range from an end symbol of a third reference signal resource to a start symbol of a fourth reference signal resource, the third reference signal resource and the fourth reference signal resource are associated with a same transmit opportunity, the third reference resource is the earliest reference signal resource in the N reference signal resources, and the fourth reference resource is the last reference signal resource in the N reference signal resources.

**22.** The apparatus according to claim 17, 19, or 20, wherein the third interval is a time range between a first reference signal transmit opportunity of a fifth reference signal resource and a second reference signal transmit opportunity of a sixth reference signal resource, neither of the first reference signal transmit opportunity and the second reference signal transmit opportunity is later than a CSI reference resource, the first reference signal transmit opportunity is one or more reference signal transmit opportunities closest to the CSI reference resource in reference signal transmit opportunities of the fifth reference signal resource, the second reference signal transmit opportunity is one or more reference signal transmit opportunities closest to the CSI reference resource in reference signal transmit opportunities of the sixth reference signal resource, the fifth reference resource is a reference signal resource in the N reference signal resources, and the sixth reference resource is a reference signal resource in the N reference signal resources.

**23.** The apparatus according to claim 22, wherein a slot in which the first reference signal transmit opportunity is located and a slot in which the second reference signal transmit opportunity is located are consecutive slots.

24. The apparatus according to any one of claims 14 to 23, further comprising:
a sending module, configured to send first capability information, wherein the first capability information indicates that a terminal device supports a case in which the N reference signal resources are in different slots; the first capability information indicates that a terminal device does not support a case in which the N reference signal resources are in different slots; or the first capability information indicates that a terminal device supports only a case in which the N reference signal resources are in different slots.

25. The apparatus according to any one of claims 14 to 23, further comprising:
a sending module, configured to send second capability information, wherein the second capability information indicates that a terminal device supports a case in which there is an uplink symbol in the second interval of the N reference signal resources; the second capability information indicates that a terminal device does not support a case in which there is an uplink symbol in the second interval of the N reference signal resources; or the second capability information indicates that a terminal device supports only a case in which there is no uplink symbol in the second interval of the N reference signal resources.

26. The apparatus according to any one of claims 14 to 23, further comprising:
a sending module, configured to send third capability information, wherein the third capability information indicates that a terminal device supports a case in which there is an uplink symbol in the third interval of the N reference signal resources; the third capability information indicates that a terminal device does not support a case in which there is an uplink symbol in the third interval of the N reference signal resources; or the third capability information indicates that a terminal device supports only a case in which there is no uplink symbol in the third interval of the N reference signal resources.

27. A communication apparatus, comprising a processor, wherein the processor is coupled to a memory;

the memory is configured to store a computer program or instructions; and
the processor is configured to execute some or all computer programs or instructions in the memory, and when the some or all computer programs or instructions are executed, the processor is configured to implement the method according to any one of claims 1 to 13.

28. A communication apparatus, comprising a processor and a memory, wherein

the memory is configured to store a computer program or instructions; and
the processor is configured to execute some or all computer programs or instructions in the memory, and when the some or all computer programs or instructions are executed, the processor is configured to implement the method according to any one of claims 1 to 13.

29. A chip system, wherein the chip system comprises a processing circuit, and the processing circuit is coupled to a storage medium; and
the processing circuit is configured to execute some or all computer programs or instructions in the storage medium, and when the some or all computer programs or instructions are executed, the processing circuit is configured to implement the method according to any one of claims 1 to 13.

30. A computer-readable storage medium, configured to store a computer program, wherein the computer program comprises instructions for implementing the method according to any one of claims 1 to 13.

31. A computer program product, wherein the computer program product comprises computer program code, and when the computer program code is run on a computer, the computer is enabled to perform the method according to any one of claims 1 to 13.

FIG. 1a

FIG. 1b

FIG. 1c

Step 201

Obtain configuration information of a reference signal resource set, where the configuration information of the reference signal resource set includes configuration information of K reference signal resources, and the configuration information of the K reference signal resources is for determining the K reference signal resources

Step 202

Determine N reference signal resources included in a channel measurement resource pair, where the N reference signal resources are N reference signal resources in the K reference signal resources.

FIG. 2

Channel measurement resource pair

Reference Reference
signal signal
resource 0 resource 1

Slot  0  1  2  3  4  5  6  7  8  9  0  1  2  3  4  5  6  7  8  9

...

Configuration takes effect or is activated

Transmit opportunity n

Transmit opportunity n+1

FIG. 3

Interval

Symbol    i    i+1   i+2   i+3   i+4   i+5   i+6   i+7   i+8   i+9   i+10   i+11   i+12   i+13

Transmit
opportunity n

FIG. 4

EP 4 380 091 A1

D D D D D F U D D D D D F U

Channel measurement
resource pair

Reference
signal
resource 0

Reference
signal
resource 1

Symbol  i  i+1  i+2  i+3  i+4  i+5  i+6  i+7  i+8  i+9  i+10  i+11  i+12  i+13

FIG. 5

D D D D D D D D D D D D D D

Channel measurement
resource pair

Reference signal resource 0    Reference signal resource 1

Symbol 0 1 2 3 4 5 6 7 8 9 10 11 12 13

Slot 0 1 2 3 4 5 6 7 8 9

FIG. 6

Channel measurement
resource pair

Reference signal resource 1    Reference signal resource 2    Reference signal resource 3

Slot 0 1 2 3 4 5 6 7 8 9

D D D D D D D D D D D D D D    D D D D D D D D D D D D D D

Symbol 0 1 2 3 4 5 6 7 8 9 10 11 12 13    0 1 2 3 4 5 6 7 8 9 10 11 12 13

FIG. 7

FIG. 8

FIG. 9

D   D   D   D   D   F   U   D   D   D   D   D   F   U

Channel measurement
resource pair

Reference          Reference
signal             signal
resource 0         resource 1

Symbol   i   i+1  i+2  i+3  i+4  i+5  i+6  i+7  i+8  i+9  i+10 i+11 i+12 i+13

FIG. 10

EP 4 380 091 A1

Communication apparatus 1100

| Processing module 1110 | Receiving module 1120a | Sending module 1120b |

Storage module 1130

FIG. 11

Communication apparatus 1200

| Processor 1210 | Transceiver 1220 |

Memory 1230

FIG. 12

| INTERNATIONAL SEARCH REPORT | International application No. |
|---|---|
| | **PCT/CN2022/108340** |

**A.     CLASSIFICATION OF SUBJECT MATTER**

H04L 5/00(2006.01)i

According to International Patent Classification (IPC) or to both national classification and IPC

**B.     FIELDS SEARCHED**

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNTXT; ENTXTC; VEN; WPABS; ENTXT; CNKI; 3GPP: 信道状态信息, 非相干联合发送, 多传输点, 参考信号资源, 集合, 配置, 信息, 时隙, 区间, 上行符号, 相位, 差, 不一致, 传输, 发射, 时机, 机会, CSI, NCJT, TRP, reference signal resources, set, configure, information, slot, interval, uplink symbol, phase, difference, transmission, opportunity

**C.     DOCUMENTS CONSIDERED TO BE RELEVANT**

| Category* | Citation of document, with indication, where appropriate, of the relevant passages | Relevant to claim No. |
|---|---|---|
| A | CN 108933648 A (ZTE CORP.) 04 December 2018 (2018-12-04)<br>entire document | 1-31 |
| A | CN 112134664 A (HUAWEI TECHNOLOGIES CO., LTD.) 25 December 2020 (2020-12-25)<br>entire document | 1-31 |
| A | US 2020021347 A1 (LG ELECTRONICS INC.) 16 January 2020 (2020-01-16)<br>entire document | 1-31 |
| A | "R1-1705303: Enhancement to CSI Feedback"<br>*3GPP TSG RAN WG1 Meeting #88bis*, 25 March 2017 (2017-03-25),<br>entire document | 1-31 |

☐ Further documents are listed in the continuation of Box C.     ☑ See patent family annex.

| *  Special categories of cited documents: | "T"  later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **10 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/108340** |

| Patent document cited in search report | | | Publication date (day/month/year) | Patent family member(s) | | | Publication date (day/month/year) |
| --- | --- | --- | --- | --- | --- | --- | --- |
| CN | 108933648 | A | 04 December 2018 | WO | 2018219068 | A1 | 06 December 2018 |
| CN | 112134664 | A | 25 December 2020 | None | | | |
| US | 2020021347 | A1 | 16 January 2020 | RU | 2699586 | C1 | 06 September 2019 |
| | | | | CN | 110741583 | A | 31 January 2020 |
| | | | | EP | 3552333 | A1 | 16 October 2019 |
| | | | | CL | 2019000370 | A1 | 23 September 2019 |
| | | | | CN | 114339871 | A | 12 April 2022 |
| | | | | US | 2021135725 | A1 | 06 May 2021 |
| | | | | AU | 2001282267 | A1 | 16 May 2002 |
| | | | | BR | 112019008357 | A2 | 09 July 2019 |
| | | | | KR | 20190071655 | A | 24 June 2019 |
| | | | | JP | 2020503710 | A | 30 January 2020 |
| | | | | PH | 12019500259 | A1 | 21 October 2019 |
| | | | | US | 2019165847 | A1 | 30 May 2019 |
| | | | | KR | 20190062279 | A | 05 June 2019 |
| | | | | EP | 3813283 | A1 | 28 April 2021 |
| | | | | WO | 2019107873 | A1 | 06 June 2019 |
| | | | | MX | 2019000579 | A | 30 October 2019 |
| | | | | CA | 3030518 | A1 | 28 May 2019 |
| | | | | AU | 2018282267 | A1 | 13 June 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110865185